# EUROPEAN PATENT APPLICATION

(11) **EP 4 589 919 A1**
(43) Date of publication of application: **23.07.2025**
(21) Application number: 25150433.8
(22) Date of filing: 07.01.2025
(51) Int. Cl.: H04L 61/50, G06F 9/455, G06F 15/16

(54) **PROGRAM AND METHOD OF CONTROLLING INFORMATION PROCESSING APPARATUS**

(30) Priority: 16.01.2024 JP 2024004661
(71) Applicant: CANON KABUSHIKI KAISHA, Tokyo 146-8501 (JP)
(72) Inventor: IURA, Masataka, Tokyo, 146-8501 (JP)
(74) Representative: TBK

(57) **Abstract**

A second apparatus (101) having a second operating environment that is on a second OS operating as a host OS and that is on a guest OS, the second apparatus (101) obtain a second IP address of the second apparatus (101) through a second API different from a first API on the basis of an operating environment of a predetermined program being the second operating environment; execute second determination processing of determining whether the second apparatus (101) belongs to a first network, using the second IP address obtained through the second API; and execute first processing on the basis of the second apparatus being determined to belong to the first network in the second determination processing, and execute second processing on the basis of the second apparatus (101) being determined not to belong to the first network in the second determination processing.

## Description

### BACKGROUND OF THE INVENTION

### Field of the Invention

The present invention relates to a program, and to a method of controlling an information processing apparatus.

### Description of the Related Art

Japanese Patent Laid-Open No. 2009-049679 describes a configuration in which two virtual computers, one running on an image processing apparatus OS (a host OS) and the other on a thin client OS (a guest OS), are implemented on memory.

### SUMMARY OF THE INVENTION

The present invention provides a program capable of improving the convenience of a program that can run in an operating environment that is on an OS running as a host OS and that is on a guest OS, as well as a method of controlling an information processing apparatus.

The present invention in its first aspect provides a program as specified in claims 1 to 14.

The present invention in its second aspect provides a method of controlling an information processing apparatus as specified in claim 15.

According to the present invention, it is possible to improve the convenience of a program that can run in an operating environment that is on an OS running as a host OS and that is on a guest OS.

Further features of the present invention will become apparent from the following description of exemplary embodiments with reference to the attached drawings.

### BRIEF DESCRIPTION OF THE DRAWINGS

FIG. 1 is a diagram illustrating the configuration of a communication system.
FIGS. 2A and 2B are diagrams illustrating the software configuration of an information processing apparatus.
FIG. 3 is a diagram illustrating a screen displayed by a communication app.
FIG. 4 is a flowchart illustrating processing executed by a communication app.
FIG. 5 is a diagram illustrating a screen displayed by a communication app.
FIG. 6 is a diagram illustrating a screen displayed by a communication app.
FIG. 7 is a flowchart illustrating processing executed by a communication app.
FIG. 8 is a flowchart illustrating processing executed by a communication app.
FIG. 9 is a diagram illustrating a screen displayed by a communication app.
FIGS. 10A and 10B are diagrams illustrating screens displayed by a communication app.
FIGS. 11A and 11B are flowcharts illustrating processing executed by a communication app.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

Incidentally, with the spread of operating environments that are on an OS running as a host OS and that are on a guest OS, it is desirable to improve the convenience of a program capable of running in such an operating environment.

According to one aspect of the present invention, it is possible to improve the convenience of a program that can run in an operating environment that is on an OS running as a host OS and that is on a guest OS.

### First Embodiment

An information processing apparatus and a communication apparatus included in a communication system according to the present embodiment will be described hereinafter. The present embodiment will describe a smartphone as an example of the information processing apparatus, but the information processing apparatus is not limited thereto, and any of a variety of devices, such as a mobile terminal, a laptop PC, a tablet terminal, a Personal Digital Assistant (PDA), a digital camera, or the like, may be applied thereto. Likewise, any of a variety of devices can be applied as the communication apparatus, as long as the device is capable of communicating with the information processing apparatus wirelessly. For example, if the device is a printer, the printer may be an ink jet printer, a full-color laser beam printer, a black and white printer, or the like. However, the device is not limited to a printer, and can be applied in a scanner, a copier, a facsimile device, a mobile terminal, a smartphone, a laptop PC, a tablet terminal, a PDA, a digital camera, a music playback device, a television, a smart speaker, or the like as well. The device can also be a multifunction peripheral provided with a plurality of functions, such as a copying function, a fax function, a printing function, a scanner function, and the like. The present embodiment will assume that the communication apparatus is a multifunction printer having a printing function, a scanner function, and the like.

### Hardware Configurations of Apparatuses

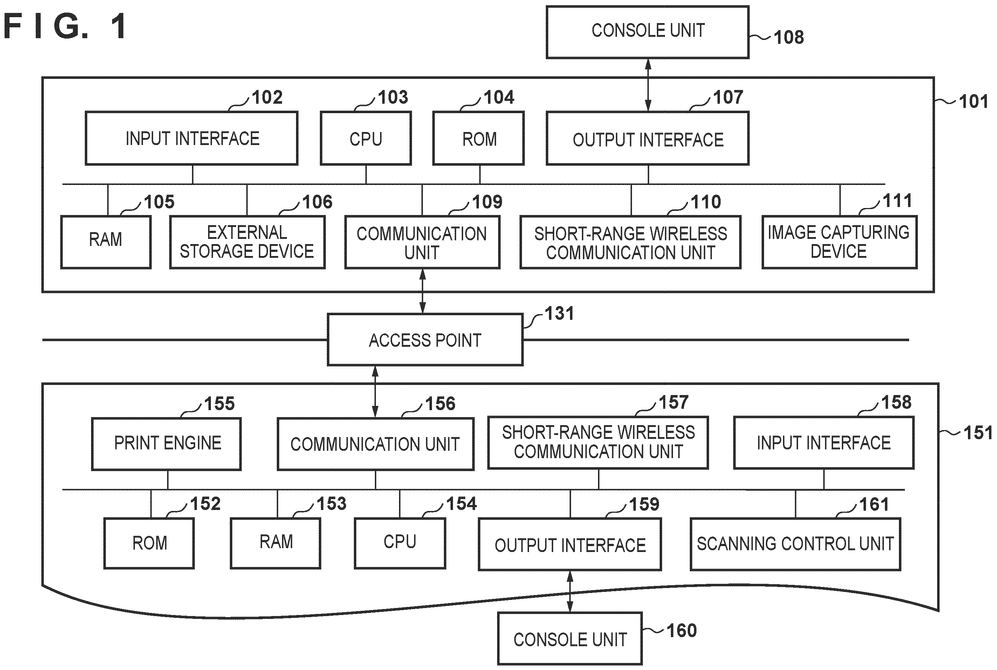

First, the configuration of the information processing apparatus included in the communication system of the present embodiment, and the configuration of a communication apparatus capable of communicating with the information processing apparatus, will be described with reference to the block diagram in FIG. 1. Although the present embodiment will describe an example having the following configuration, the functions are not intended to be limited particularly to the content of FIG. 1.

An information processing apparatus 101 includes an input interface 102, a CPU 103, a ROM 104, a RAM 105, an external storage device 106, an output interface 107, a console unit 108, a communication unit 109, a short-range wireless communication unit 110, an image capturing device 111, and the like. The input interface 102 is an interface for accepting data inputs, operational instructions, and the like from a user, and is constituted by a physical keyboard, display buttons, a touch panel, or the like. Note that the output interface 107 (described later) and the input interface 102 may be implemented by the same configuration, with that configuration both outputting screens and accepting operations from the user.

The CPU 103 is a system control unit, and controls the information processing apparatus 101 as a whole. The ROM 104 stores fixed data such as control programs executed by the CPU 103, data tables, an embedded operating system ("OS", hereinafter) program, and the like. In the present embodiment, the control programs stored in the ROM 104 perform software execution control, such as scheduling, task switching, interrupt processing, and the like, under the management of the embedded OS stored in the ROM 104. Note that the present embodiment assumes that the OS stored in the ROM 104 and run on the information processing apparatus 101 is the Android (registered trademark) OS or the Chrome (registered trademark) OS, both of which are provided by Google. If the OS running on the information processing apparatus 101 is the Chrome OS, the ROM 104 is assumed to also store a virtual Android OS for running Android OS apps (described later) on the information processing apparatus 101.

The RAM 105 is constituted by Static Random Access Memory (SRAM) or the like that requires a backup power source. Note that the RAM 105 holds data in a primary battery for data backup (not shown), and can therefore store important data such as program control variables in a non-volatile state. A memory area for storing setting information of the information processing apparatus 101, management data of the information processing apparatus 101, and the like is also provided in the RAM 105. The RAM 105 is used as a main memory and a working memory for the CPU 103.

The external storage device 106 includes an application program having a function for communicating with a communication apparatus 151 (called a "communication app" hereinafter). Specifically, the communication app is an app having a printing function for causing the communication apparatus 151 to print, a scan function for causing the communication apparatus 151 to scan, and the like. The communication app is not limited thereto, however, and may be an app having only a printing function or a scan function (a printing app or a scan app), or may be an app having other functions. For example, the communication app may be a setup app having a function for executing network setup processing for connecting the communication apparatus 151 to an external access point. The present embodiment assumes that the communication app includes the printing function, the scan function, and all of the functions for executing the network setup processing. The external access point is, for example, an access point 131, which will be described later. Additionally, the external storage device 106 includes various types of programs, such as a print information generation program that generates print information which can be interpreted by the communication apparatus 151, an information sending/receiving control program that sends and receives information to and from the connected communication apparatus 151 through the communication unit 109, and the like. These programs may be included in the app described above, or may be configured separately from the app. The external storage device 106 also stores various types of information used by these programs. The external storage device 106 also stores image data obtained from other information processing apparatuses or the Internet through the communication unit 109. The present embodiment assumes that the communication app is an Android OS app.

The output interface 107 is an interface for controlling the console unit 108 to display data, make notifications of the state of the information processing apparatus 101, and the like. The console unit 108 is constituted by light-emitting diodes (LEDs), a liquid crystal display (LCD), or the like, and displays data, makes notifications regarding the state of the information processing apparatus 101, and the like. Note that inputs from the user can be accepted through the console unit 108 by providing, in the console unit 108, a software keyboard including numerical value input keys, a mode setting key, a confirm key, a cancel key, a power key, and the like.

The communication unit 109 is connected to devices such as the communication apparatus 151, and is configured to communicate data. For example, the communication unit 109 is capable of connecting to an access point (not shown) in the communication apparatus 151. Connecting the communication unit 109 and the access point in the communication apparatus 151 enables the information processing apparatus 101 and the communication apparatus 151 to communicate with each other. The access point may be referred to as an "AP" hereinafter. Note that the communication unit 109 may communicate directly with the communication apparatus 151 wirelessly, or may communicate through an access point 131 outside the information processing apparatus 101 and the communication apparatus 151. The present embodiment assumes that the IEEE 802.11 series communication standard is used as the wireless communication method. The IEEE 802.11 series communication standard is Wi-Fi (registered trademark).

A device such as a wireless LAN router or the like can be given as an example of the access point 131. Note that a method in which the information processing apparatus 101 and the communication apparatus 151 connect directly without using an external access point will be referred to as a "direct connection method" in the present embodiment. A method in which the information processing apparatus 101 and the communication apparatus 151 connect via the external access point 131 will be referred to as an infrastructure connection method hereinafter.

The short-range wireless communication unit 110 is a configuration for wirelessly connecting to devices at a short distance, such as the communication apparatus 151, and communicating data, and communicates using a communication method different from that of the communication unit 109. The short-range wireless communication method used by the short-range wireless communication unit 110 is, for example, Bluetooth (registered trademark), Near Field Communication (NFC), or the like. The type of Bluetooth may be Bluetooth Classic or Bluetooth Low Energy. The short-range wireless communication unit 110 can connect to a short-range wireless communication unit 157 in the communication apparatus 151.

The image capturing device 111 is a device that converts images captured by an image sensor into digital data. The digital data is initially stored in the RAM 105. The digital data is then converted to a predetermined image format by a program executed by the CPU 103, and the resulting data is stored in the external storage device 106 as image data.

The communication apparatus 151 includes a ROM 152, a RAM 153, a CPU 154, a print engine 155, a communication unit 156, the short-range wireless communication unit 157, an input interface 158, an output interface 159, a console unit 160, a scanning control unit 161, and the like. When a connection mode (a communication mode) is set, the communication apparatus 151 can operate in the set connection mode.

The communication unit 156 is a configuration for the communication apparatus 151 to communicate with other devices, and in the present embodiment, the communication unit 156 communicates according to the IEEE 802.11 series communication standard. The communication unit 156 has an access point for connecting to devices such as the information processing apparatus 101 as an access point within the communication apparatus 151. The access point can connect to the communication unit 109 of the information processing apparatus 101. Note that the communication unit 156 may communicate directly with the information processing apparatus 101 wirelessly, or may communicate via the access point 131. Additionally, the communication unit 156 may include hardware that functions as an access point, or may operate as an access point using software for functioning as an access point. The present embodiment assumes that the communication unit 156 and the short-range wireless communication unit 157 are implemented as a single wireless chip. In other words, in the present embodiment, a combo chip is assumed to be used, which handles both an IEEE 802.11 series communication standard communication function and a short-range wireless communication-based communication function. However, the configuration is not limited thereto, and the communication unit 156 and the short-range wireless communication unit 157 may be implemented by separate wireless chips.

The RAM 153 is constituted by DRAM or the like or the like that requires a backup power source. Note that the RAM 153 holds data by being supplied with power for data backup (not shown), and can therefore store important data such as program control variables in a non-volatile state. The RAM 153 is also used as a main memory and working memory for the CPU 154, and operates as a reception buffer for temporarily storing print information received from the information processing apparatus 101 or the like, stores various types of information, and the like.

The ROM 152 stores fixed data such as control programs executed by the CPU 154, data tables, OS programs, and the like. In the present embodiment, the control programs stored in the ROM 152 perform software execution control, such as scheduling, task switching, interrupt processing, and the like, under the management of the embedded OS stored in the ROM 152. A memory area for storing data required to be held even when power is not supplied, such as setting information of the communication apparatus 151, management data of the communication apparatus 151, and the like, is also provided in the ROM 152.

The CPU 154 is a system control unit, and controls the communication apparatus 151 as a whole. On the basis of the information stored in the RAM 153 and a print job received from the information processing apparatus 101 or the like, the print engine 155 forms an image on a recording medium such as paper using a recording agent such as ink, and the result of the printing is output. At this time, the print job sent from the information processing apparatus 101 or the like involves sending a large amount of data and requires high-speed communication, and is therefore received via the communication unit 156, which is capable of faster communication than the short-range wireless communication unit 157.

The short-range wireless communication unit 157 is a configuration for wirelessly connecting to devices at a short distance, such as the information processing apparatus 101, and communicating data, and communicates using a communication method different from that of the communication unit 156. The short-range wireless communication method used by the short-range wireless communication unit 157 is, for example, Bluetooth (registered trademark), NFC, or the like. The type of Bluetooth may be Bluetooth Classic or Bluetooth Low Energy. The short-range wireless communication unit 157 can connect to the short-range wireless communication unit 110.

The input interface 158 is an interface for accepting data inputs, operational instructions, and the like from a user, and is constituted by a physical keyboard, buttons, a touch panel, or the like. Note that the output interface 159 (described later) and the input interface 158 may be implemented by the same configuration, with that configuration both outputting screens and accepting operations from the user. The output interface 159 is an interface for controlling the console unit 160 to display data, make notifications of the state of the communication apparatus 151, and the like.

The console unit 160 is constituted by a display unit such as light-emitting diodes (LEDs), a liquid crystal display (LCD), or the like, and displays data, makes notifications regarding the state of the communication apparatus 151, and the like. Note that inputs from the user can be accepted through the console unit 160 by providing, in the console unit 160, a software keyboard including numerical value input keys, a mode setting key, a confirm key, a cancel key, a power key, and the like.

The scanning control unit 161 includes an image sensor unit (a reading unit) that scans a document placed on a document platform or an Automatic Document Feeder (ADF) (not shown). The image sensor unit includes a light source that irradiates the document with light, and an image sensor in which elements that read light reflected by the document and photoelectrically convert that light are arranged. The scanning control unit 161 obtains image data by analog-digital (AD) conversion of an analog electrical signal obtained by the image sensor unit reading the document. The scanning control unit 161 includes circuitry for direct memory access (DMA) transfer to store the obtained image data in the RAM 153.

### Direct Connection Method

"Direct connection" refers to a form in which devices connect directly to each other (i.e., peer-to-peer) wirelessly, without going through an external apparatus such as the access point 131. The communication apparatus 151 can operate in a mode for communicating over a direct connection (a "direct connection mode") as one connection mode. Wi-Fi communication includes a plurality of modes for communicating over a direct connection, such as software AP mode, Wi-Fi Direct (registered trademark) mode, and the like. Wi-Fi Direct will be referred to as "WFD" hereinafter.

A mode in which a direct connection is made through WFD is called "WFD mode". WFD is a standard developed by the Wi-Fi Alliance and is included in the IEEE 802.11 series communication standard. In WFD mode, a device to serve as a communication partner is searched for using device search information, after which the roles of P2P group owner (GO) and P2P client are determined, and the remaining wireless connections are processed. "Group owner" corresponds to the parent station (parent device) in Wi-Fi, and the client corresponds to a child station (child device) in Wi-Fi. This role determination corresponds to GO Negotiation in P2P, for example. In WFD mode, the communication apparatus 151 is neither the parent station nor the child station before the roles have been determined. Specifically, one device among the devices that are to communicate issues the device search information, and searches for a device to connect to in WFD mode. When the other device, which is to serve as the communication partner, is discovered, the devices confirm information on the services and functions those respective devices can supply. Note that the confirmation of the device supply information is optional, and is not required. The device supply information confirmation phase corresponds to Provision Discovery in P2P, for example. Next, which device will serve as the P2P client and which will serve as the P2P group owner is determined by confirming this device supply information with each other. Once the client and the group owner have been determined, the devices exchange parameters for communicating through WFD. The remaining wireless connections and IP connections are processed between the P2P client and group owner on the basis of the exchanged parameters. Note that in WFD mode, the communication apparatus 151 may skip the GO Negotiation described above, and the communication apparatus 151 may always operate as the GO. In other words, the communication apparatus 151 may operate in Autonomous GO mode, which is a WFD mode. A state in which the communication apparatus 151 is operating in WFD mode is a state in which, for example, a connection using WFD is not established but the communication apparatus 151 is operating as the GO, a connection using WFD is established and the communication apparatus 151 is operating as the GO, or the like.

In the software AP mode, among the communicating devices (e.g., the information processing apparatus 101 and the communication apparatus 151), one of the devices (e.g., the information processing apparatus 101) functions as a client that has a role of requesting various types of services. The other device provides a Wi-Fi access point function through software settings. The software AP corresponds to the parent station in Wi-Fi, and the client corresponds to the child station in Wi-Fi. In software AP mode, the client uses the device search information to search for a device that will serve as a software AP. Once a software AP is discovered, the remaining wireless connection processing (the establishment of a wireless connection and the like) is performed between the client and the software AP, after which IP connection processing (IP address allocation and the like) is performed. Note that commands, parameters, and the like sent and received when establishing a wireless connection between the client and the software AP may be any specified by the Wi-Fi standard, and will therefore not be described here.

In the present embodiment, when establishing and maintaining a direct connection, the communication apparatus 151 operates as the parent station in the network to which the communication apparatus 151 belongs. Note that "parent station" refers to a device that constructs a wireless network, and is a device that provides child stations with the parameters used to connect to the wireless network. The parameters used to connect to the wireless network are parameters pertaining to a channel used by the parent station, for example. By receiving these parameters, a child station connects to the wireless network constructed by the parent station using the channel used by the parent station. In direct connection mode, the communication apparatus 151 operates as the parent station, and the communication apparatus 151 can therefore determine which frequency band and which channel to use in the communication performed in direct connection mode. In the present embodiment, the communication apparatus 151 is assumed to use a channel corresponding to the 2.4 GHz frequency band and a channel corresponding to the 5 GHz frequency band in the communication performed in direct connection mode. The user can then set the frequency band to be used (i.e., the frequency band channel to be used) as desired by making a setting in the screen displayed by the communication apparatus 151. However, the present embodiment assumes that even if 5 GHz is selected in the screen displayed by the communication apparatus 151, the communication apparatus 151 will not use a channel corresponding to a Dynamic Frequency Selection (DFS) band in the 5 GHz frequency band for the communication performed in direct connection mode. In other words, the communication apparatus 151 is assumed to use only channels corresponding to frequency bands outside the DFS band in the 5 GHz frequency band for the communication performed in direct connection mode. If, when using a channel corresponding to the DFS band, a radar wave is detected in the frequency band corresponding to that channel, it is necessary to change the channel currently being used. A frequency band in which the channel may be changed in response to a radar wave being detected is called a "DFS band". Note, however, that it may be possible to use a channel corresponding to the DFS band among the 5 GHz frequency band for communication performed in direct connection mode when, for example, using a wireless chip that supports the DFS function.

### Infrastructure Connection Method

"Infrastructure connection" is a type of connection for devices which are to communicate (e.g., the information processing apparatus 101 and the communication apparatus 151) to connect to an access point overseeing the network of those devices (e.g., the access point 131) and communicate with each other via the access point. The communication apparatus 151 is also capable of operating in a mode for communicating over an infrastructure connection (infrastructure connection mode) as one connection mode.

In an infrastructure connection, each device uses device search information to search for an access point. Once an access point is discovered, the remaining wireless connection processing (the establishment of a wireless connection and the like) is performed between the devices and the access point, after which IP connection processing (IP address allocation and the like) is performed. Note that commands, parameters, and the like sent and received when establishing a wireless connection between the devices and the access point may be any specified by the Wi-Fi standard, and will therefore not be described here.

In the present embodiment, when the communication apparatus 151 operates in infrastructure connection mode, the access point 131 operates as the parent device, and the communication apparatus 151 operates as a child device. In other words, in the present embodiment, "infrastructure connection" refers to a connection between the communication apparatus 151, which operates as a child device, and a device operating as a parent device. When the communication apparatus 151 has established an infrastructure connection and the information processing apparatus 101 has also established an infrastructure connection with the access point 131, the communication apparatus 151 and the information processing apparatus 101 can communicate via the access point 131. The channel used for communication in the infrastructure connection is determined by the access point 131, and thus the communication apparatus 151 communicates in the infrastructure connection using the channel determined by the access point 131. In the present embodiment, the communication apparatus 151 is assumed to use a channel corresponding to the 2.4 GHz frequency band and a channel corresponding to the 5 GHz frequency band in the communication performed in the infrastructure connection. Note that the communication apparatus 151 can also use a channel corresponding to the DFS band and the 5 GHz frequency band in the communication performed in the infrastructure connection. Note also that to communicate with the communication apparatus 151 via the access point 131, it is necessary for the information processing apparatus 101 to recognize that the communication apparatus 151 belongs to the network formed by the access point 131 and to which the information processing apparatus 101 belongs. Additionally, when the information processing apparatus 101 and the communication apparatus 151 are connected to the access point 131 by an infrastructure connection, the communication apparatus 151 can be discovered through a broadcast made by the information processing apparatus 101.

### Network Setup Mode

The communication apparatus 151 is capable of operating in a network setup mode. The trigger for the communication apparatus 151 to start operating in the network setup mode may be, for example, a user pressing a network setup mode button, or the communication apparatus 151 being started (powered on) for the first time after being shipped. The network setup mode button may be a hardware (physical) button provided in the communication apparatus 151, or may be a software button displayed by the communication apparatus 151 in a display unit 158.

When the communication apparatus 151 starts operating in the network setup mode, Wi-Fi communication is enabled. Specifically, the communication apparatus 151 enables an internal AP of the communication apparatus 151 (a connection configuration AP), which is specifically for the network setup mode, as processing for enabling Wi-Fi communication. This enables the communication apparatus 151 to establish a direct connection with the information processing apparatus 101 using Wi-Fi. Connection information (a Service Set Identifier (SSID), a password, or the like) for connecting to the connection configuration AP is assumed to be held in advance in a communication app installed in the information processing apparatus 101, and the information processing apparatus 101 is assumed to have recognized the connection information for connecting to the connection configuration AP. Accordingly, unlike the connection information of the AP enabled in the direct connection mode, it is assumed that the connection information for connecting to the connection configuration AP cannot be changed by the user as desired. Note that in the network setup mode, the communication apparatus 151 may connect to the information processing apparatus 101 using Wi-Fi Direct (WFD) instead of normal Wi-Fi. In other words, the communication apparatus 151 may operate as the Group Owner and receive setting commands from the information processing apparatus 101 through communication using WFD. Additionally, in the network setup mode, the communication apparatus 151 may connect to the information processing apparatus 101 using Bluetooth. Here, "Bluetooth" includes Bluetooth Classic, Bluetooth Low Energy (BLE), and the like. In other words, for example, in the network setup mode, the communication apparatus 151 may operate as a slave device according to BLE, and receive setting commands from the information processing apparatus 101 through communication using BLE. Additionally, in the network setup mode, the communication apparatus 151 may be capable of performing both network setup using Wi-Fi and network setup using BLE. In other words, when the communication apparatus 151 starts operating in the network setup mode, both Wi-Fi communication and BLE communication may be enabled. Specifically, when the communication apparatus 151 starts operating in the network setup mode, both (i) the connection configuration AP may be enabled, and (ii) an advertising state, in which a BLE connection is enabled by sending advertising information using BLE, may be enabled.

When operating in the network setup mode, the communication apparatus 151 controls the communication unit 156 to operate as a network setup access point (connection configuration AP, setup access point), which is enabled only while operating in the network setup mode. The setup access point is a different access point from the access point enabled in the software AP mode described above. The SSID of the setup access point is assumed to include a predetermined character string that can be recognized by the communication app of the information processing apparatus 101.

Additionally, the communication apparatus 151 operating in the network setup mode is assumed to use a predetermined communication protocol (a setup communication protocol) in the communication with the information processing apparatus 101, which is connected to the setup access point. Specifically, the setup communication protocol is Simple Network Management Protocol (SNMP), for example.

Once a predetermined amount of time has passed after the communication apparatus 151 starts operating in the network setup mode, the communication apparatus 151 stops operating in the network setup mode and disables the setup access point. The communication apparatus 151 also disables the setup access point upon receiving, from the information processing apparatus 101 currently in the network setup mode, connection information for connecting to the access point 131 and an instruction to change the operation mode of the wireless communication. It is also assumed that the setup access point is an access point that does not require a password for connection. Note, however, that the setup access point may be an access point that requires a password. In this case, it is assumed that the password used to connect to the setup access point is a fixed password (which cannot be changed by the user) with which the communication app is provided in advance.

Software Configuration of Information Processing Apparatus 101 The software configuration of the information processing apparatus 101

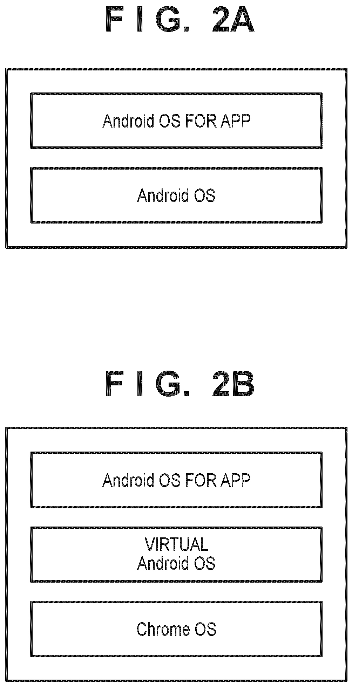

according to the present embodiment will be described next. FIG. 2A illustrates an example of the software configuration of the information processing apparatus 101 when the host OS running on the information processing apparatus 101 is the Android OS (a first OS). In this configuration, Android OS apps run on the Android OS. Here, it is assumed that the software configuration of the information processing apparatus 101 does not include the Chrome OS. An environment in which the OS running on the lowest layer of the information processing apparatus 101 is the Android OS (i.e., is not the Chrome OS), as in this case, will be called a "first environment" hereinafter. Specifically, the first environment is an environment in which, for example, the information processing apparatus 101 is provided with a host OS but not with a guest OS, and the app runs on the host OS. Additionally, the first environment is, for example, an environment in which the information processing apparatus 101 is provided with both a host OS and a guest OS, but the app running in the present embodiment runs on the host OS but runs without going through the guest OS (does not run on the guest OS). Note that "host OS" is an abbreviation for "host operating system", and "guest OS" is an abbreviation for "guest operating system".

FIG. 2B illustrates an example of the software configuration of the information processing apparatus 101 when the host OS running on the information processing apparatus 101 is the Chrome OS (a second OS). In this configuration, a virtual Android OS, which is a virtual OS, runs on the Chrome OS. Android OS apps run on the virtual Android OS. An environment in which the OS running on the lowest layer of the information processing apparatus 101 is the Chrome OS and a virtual Android OS is running on the Chrome OS, as in this case, will be called a "second environment" hereinafter. Note that in the present embodiment, the "virtual OS" is a program for running apps not supported by the host OS on the host OS, and is a guest OS. The virtual OS may be an entire existing OS, such as the Android OS or the like, an OS obtained by omitting some modules from an entire existing OS, or a program created separately from an existing OS. The virtual OS is implemented through virtualization techniques such as a Virtual Machine, a container-based technique, or the like. The information processing apparatus 101 having the first environment and the information processing apparatus 101 having the second environment are assumed to be separate information processing apparatuses 101. In other words, the processing executed based on the fact that the communication app is running in the first environment (described later) is processing executed by a first information processing apparatus 101 having the first environment. Likewise, the processing executed based on the fact that the communication app is running in the second environment (described later) is processing executed by a second information processing apparatus 101 having the second environment. However, installing and uninstalling the host OS, the guest OS, and the like in a single information processing apparatus 101 may be performed to switch between a state where the first environment is constructed in the information processing apparatus 101, and a state where the second environment is constructed in the information processing apparatus 101. In other words, both the processing executed on the basis of the communication app running in the first environment and the processing executed on the basis of the communication app running in the second environment may be executed on a single information processing apparatus 101, on the basis of the environment constructed in the single information processing apparatus 101.

The Android OS app will be described hereinafter. Note that the aforementioned communication app will be described as an example of the Android OS app. An example in which the communication app is installed and run in both the first environment and the second environment will be described here. Note that the communication app will be described, as one example, as a printing app that provides a function for communicating with the communication apparatus 151, which has a printing function, and causing the communication apparatus 151 to print data such as documents, images, and the like. Apps developed for the Android OS so as to be supported by the Android OS may be referred to as "Android apps".

When the communication app executes a predetermined function, such as a cloud function of an external server, it is necessary for the information processing apparatus 101 and the communication apparatus 151 to be in a predetermined communication mode. The present embodiment will describe, as an example of a predetermined function, a function that causes the communication apparatus 151 to execute processing through an external server (not shown; described later). The predetermined communication mode is a mode in which the information processing apparatus 101 and the communication apparatus 151 can communicate with the external server (not shown) over a network formed by the external access point 131, for example.

Upon receiving an instruction to execute the predetermined function as a user instruction or the like, the communication app determines the communication mode between the information processing apparatus 101 and the communication apparatus 151. If the communication mode is determined to be a mode in which the predetermined function cannot be executed, processing for changing the communication mode is performed, such as notifying the user, for example. Here, the IP address of the information processing apparatus is used to determine the communication mode between the information processing apparatus 101 and the communication apparatus 151. For example, by comparing the IP address of the information processing apparatus 101 with the IP address of the communication apparatus 151, the communication app can determine whether the information processing apparatus 101 belongs to the network formed by the communication apparatus 151. Here, the IP address of the information processing apparatus 101 is managed by the host OS. The IP address of the information processing apparatus 101 is assigned, for example, by an apparatus operating as the access point to which the information processing apparatus 101 is connected (the communication apparatus 151, the access point 131, or the like). The communication app can obtain the IP address of the information processing apparatus 101 by using an Application Programming Interface (API) of the host OS.

However, the information processing apparatus 101 may have the first environment, the second environment, or the like, as described above. In other words, the OS configuration may differ depending on the information processing apparatus 101. Here, when the communication app is running in the second environment and an attempt is made to obtain the IP address of the information processing apparatus 101 through the same method as when the communication app is running in the first environment, the communication app obtains the IP address assigned to the virtual OS by the host OS. In other words, the communication app obtains an IP address that is different from the IP address managed by the host OS. As a result, the communication app is unable to appropriately determine the mode of the communication between the information processing apparatus 101 and the communication apparatus 151. Furthermore, the communication app will be unable to appropriately perform the processing for changing the communication mode.

Accordingly, in the present embodiment, the method for obtaining the IP address of the information processing apparatus 101 is varied according to the OS configuration in the information processing apparatus 101. Using such a configuration makes it possible to obtain the IP address of the information processing apparatus 101 in both the first environment and the second environment, and appropriately determine the mode of communication between the information processing apparatus 101 and the communication apparatus 151. As a result, the processing for changing the communication mode can be performed appropriately.

In the present embodiment, when the communication app executes a predetermined function, the communication app determines whether the communication app is running on a predetermined OS. The predetermined OS is, for example, the second OS described above. If the communication app is determined to be running on the second OS, the IP address is obtained from the second OS. However, if the communication app is determined not to be running on the second OS, the IP address is obtained from the first OS mentioned above. In other words, the communication app varies the method for obtaining the IP address according to the OS configuration of the information processing apparatus 101. The communication app then determines the mode of communication between the information processing apparatus 101 and the communication apparatus 151 using the obtained IP address. If the communication app determines that the communication mode is one in which the predetermined function cannot be executed, the communication app performs processing for changing the mode of communication between the information processing apparatus 101 and the communication apparatus 151.

In this manner, the communication app can vary the method for obtaining the IP address of the information processing apparatus according to the OS configuration of the information processing apparatus, and can appropriately execute processing for changing the communication mode for executing the predetermined function.

### Communication Application (Communication App)

The communication app will be described in detail hereinafter. The communication app is an app having, for example, a printing function that causes the communication apparatus 151, which functions as a printer or a printing apparatus, to print data such as a document file, an image file, or the like held in the information processing apparatus 101. The communication app also has a function for importing image data, document data, and the like scanned by the communication apparatus 151 into the information processing apparatus 101. The communication app according to the present embodiment includes, for example, a print job sending function, a scan job sending function, a copy job sending function, and the like, as will be described later.

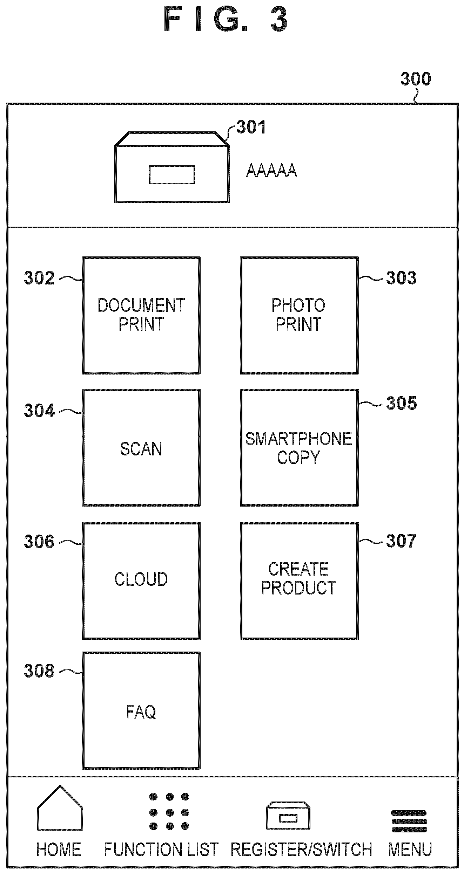

FIG. 3 is a diagram illustrating an example of a home screen of the communication app according to the present embodiment. A home screen 300 of the communication app may be displayed in response to, for example, an icon indicating the communication app displayed in the console unit 108 of the information processing apparatus 101 being operated by the user. Information 301 indicating the communication apparatus 151 registered in the communication app, interfaces 302 to 308 capable of accepting an instruction to execute a corresponding function provided by the communication app, and the like are displayed on the home screen 300 displayed by the communication app.

The information 301 indicating the communication apparatus 151 may be, for example, an icon, model information such as a model name, or the like of the communication apparatus 151. The information 301 indicating the communication apparatus 151 may be information indicating the communication apparatus 151 registered in the communication app, for example. When the communication app is started for the first time in response to a user operation, the communication app may execute processing for registering the communication apparatus 151 with the communication app (described later). In the following descriptions, the processing for registering the communication apparatus 151 with the communication app may be called "registration processing".

A document print button 302 is an interface capable of accepting an instruction to execute the print job sending function for a document file (a document printing function), for example. The print job sending function is a function for sending, to the communication apparatus 151, a print job for causing the communication apparatus 151 to print image data selected by the user in the information processing apparatus 101, for example. For example, when the user presses the document print button 302, the user can select a document file to be printed in the information processing apparatus 101, and make print settings, an instruction to execute printing, and the like.

The document file is a file in a data format corresponding to the print job sending function. For example, the data format corresponding to the document file (the data format which the communication app can print using the document printing function) may be a data format corresponding to the Portable Document Format ("PDF", hereinafter), a data format corresponding to Microsoft Word, a data format corresponding to Microsoft Excel, a data format corresponding to Microsoft PowerPoint, or the like. Note that the data format is not limited to these, and may be another data format.

A photo print button 303 is an interface capable of accepting an instruction to execute the print job sending function for an image file (a photo printing function), for example. The image file is a file in a data format corresponding to the print job sending function.

The data format corresponding to the image file may be, for example, a data format corresponding to the Joint Photographic Experts Group ("JPEG", hereinafter), a data format corresponding to the Graphics Interchange Format ("GIF", hereinafter), a data format corresponding to the Portable Network Graphics ("PNG", hereinafter), a data format corresponding to the Microsoft Windows Bitmap Image ("BMP", hereinafter), a data format corresponding to the High Efficiency Image File Format ("HEIF", hereinafter), or the like, when the communication app is running in the first environment.

The data format corresponding to the image file (the data format which the communication app can print using the photo printing function) may be, for example, a data format corresponding to JPEG, a data format corresponding to GIF, a data format corresponding to PNG, a data format corresponding to BMP, or the like, when the communication app is running on the second OS. Note that the data format is not limited to these, and may be another data format.

A scan button 304 is an interface capable of accepting an instruction to execute the scan job sending function described above, for example. The scan job sending function is a function for sending, to a printer 121, a scan job for causing the printer 121 to execute a scan and causing the information processing apparatus 101 to send image data obtained by the scan.

A copy button 305 is an interface capable of accepting an instruction to execute the copy job sending function described above, for example. The copy job sending function is a function for sending, to the printer 121, a print job for causing the communication apparatus 151 to print image data captured by the information processing apparatus 101, for example.

A cloud button 306 is an interface capable of accepting an instruction to start the execution of a cloud function, for example. The "cloud function" is a function (a predetermined function) that causes the communication apparatus 151 to execute predetermined processing through an external server (not shown), for example. The predetermined processing is printing, for example. In other words, the cloud function can also be said to be a function that provides a predetermined service to the user through the external server (not shown). The "predetermined service" is, for example, a cloud printing service, a consumable management service, or the like. The predetermined service is a service provided by a provider of the communication apparatus 151, for example, and is a service provided by an external server (not shown) on the Internet.

For example, when the user uses the cloud function for the first time, the communication apparatus 151 is first registered with the external server (not shown) on the Internet. After that, the user can use the communication app to cause the communication apparatus 151 to execute printing by sending a print job from the information processing apparatus 101 to the registered communication apparatus 151 via the external server. In other words, the cloud function is a printing service that uses the cloud, for example.

Create product 307 is an interface capable of accepting an instruction to start executing a product creation function, for example. The product creation function is a function for editing image data and creating a product, for example. The "product" may be a poster, an album, a photo book, an identification photo, a business card, a calendar, or the like, for example.

A question button 308 is an interface capable of accepting an instruction to display information that serves as a reference when the user uses the communication app, for example. The information that serves as a reference when the user uses the communication app may be, for example, questions frequently asked by users using the communication app, answers to those questions, or the like.

Although the present embodiment describes the cloud function as an example of the predetermined function, the predetermined function is not limited thereto. For example, the communication app may have, as a predetermined function, a function that provides services other than cloud printing to the user through an external server (not shown). Specifically, the other function is, for example, a point function, an automatic ink delivery function, or the like. The point function is a function for providing a point management service to the user, for example, and is a function for granting points to the user in accordance with the usage state of the communication apparatus 151. For example, when the user uses the point function, the user registers the communication apparatus 151 with a predetermined service provided by the external server on the Internet. After that, the user can receive points when printing, replacing consumables such as ink or paper, or the like using the registered communication apparatus 151. The automatic ink delivery function is a function for providing an automatic ink delivery service to the user, for example, and is a function for automatically delivering ink for using the communication apparatus 151 to the user. After the communication apparatus 151 has been registered with the various types of services, the communication apparatus 151 sends the usage state of the communication apparatus 151 to the external server at the predetermined timing. Note that an interface (not shown) capable of accepting an instruction to start the execution of the point function may be provided in the home screen 300 or another screen displayed by the communication app, separate from the cloud button 306, for example. When this interface is pressed, predetermined processing is executed in the same manner as when the cloud button 306 is pressed. The predetermined processing executed here is, for example, processing for registering the point function, the automatic ink delivery function, or the like with the communication apparatus 151. This processing is the same processing as the processing for registering the cloud function with the communication apparatus 151 (described later).

The present embodiment assumes that the communication app performs display control of the interfaces 302 to 308 capable of accepting instructions to execute each function, on the basis of registration processing (described later). Specifically, it is assumed that when no communication apparatus 151 is registered with the communication app, the communication app controls the display such that the interfaces 302 to 308 cannot be selected. It is further assumed that the communication app controls the display such that the interfaces 302 to 308 can be selected when any printer is registered with the communication app. For example, in the registration processing (described later), the communication app obtains information indicating functions supported by the communication apparatus 151. For example, on the basis of this information, the communication app may display the information such that only the interfaces of the function supported by the communication apparatus 151 can be selected. Alternatively, the communication app may control the display such that the interfaces of functions not supported by the communication apparatus 151 cannot be selected. Specifically, the control for displaying the interface such that the interface cannot be selected is control for hiding the interface, control for displaying the interface such that the interface cannot be selected (e.g., a grayscale display), or the like.

The communication app may also display an interface on the home screen 300 capable of accepting an instruction to start a function that causes the communication apparatus 151 to execute predetermined processing through an external server (not shown), on the basis of the mode of communication between the information processing apparatus 101 and the communication apparatus 151. For example, the cloud button 306 may be displayed in the case of a communication mode in which the information processing apparatus 101 and the communication apparatus 151 are connected directly without going through the access point 131. Alternatively, the cloud button 306 may be displayed when the information processing apparatus 101 and the communication apparatus 151 are in a communication mode in which those apparatuses are both connected to an external access point. Specifically, when the communication apparatus 151 registered with the communication app supports the cloud function, the communication app searches for the communication apparatus 151 on the network formed by the apparatus to which the information processing apparatus 101 is connected. For example, the communication app broadcasts the MAC address of the communication apparatus 151 obtained in the registration processing (described later) over the network and requests a response from the communication apparatus 151. When the communication app obtains the response from the communication apparatus 151, the communication app displays the cloud button 306 such that a selection instruction from the user can be accepted. On the other hand, when the communication app cannot obtain the response from the communication apparatus 151, the communication app displays the cloud button 306 such that a selection instruction from the user cannot be accepted.

In the following descriptions, a communication mode in which the information processing apparatus 101 and the communication apparatus 151 are connected directly without going through the access point 131 may be called a "direct connection". Additionally, a communication mode in which the information processing apparatus 101 and the communication apparatus 151 are connected to an external access point may be called an "infrastructure connection".

### Registration Processing

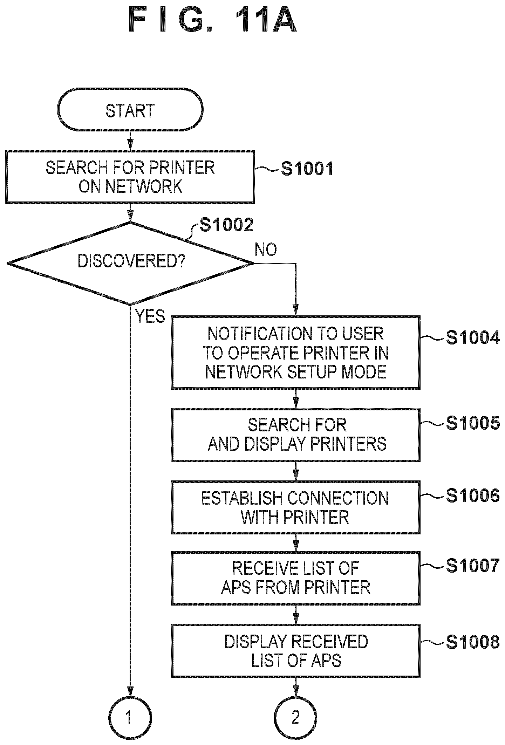

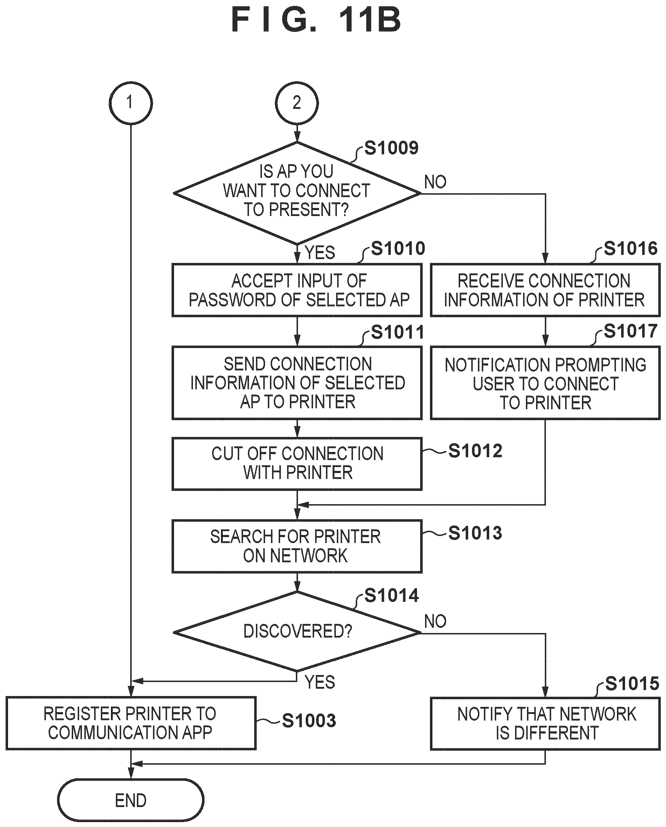

Processing for registering the communication apparatus 151 with the communication app according to the present embodiment (registration processing) will be described with reference to FIGS. 11A and 11B. FIGS. 11A and 11B are flowcharts illustrating an example of the registration processing executed by the communication app. In this flowchart, the processing executed by the communication app is realized by, for example, the CPU 103 loading a control program stored in a memory such as the ROM 104 into the RAM 105 and executing the program. The processing illustrated in FIGS. 11A and 11B may be executed when, for example, the communication app has been installed in the information processing apparatus 101 through a user operation and is launched for the first time.

In step S1001, the communication app searches for the communication apparatus 151 on the network formed by the access point 131 to which the information processing apparatus 101 is connected. Specifically, in S1001, the communication apparatus 151 is searched for by broadcasting a signal requesting a response from the communication apparatus 151 over the network. The signal requesting the response from the communication apparatus 151 includes information indicating the communication apparatus 151 that supports the communication app, for example. Specifically, the signal is a packet, for example. The packet may include, for example, the IP address of the communication apparatus 151 that supports the communication app, stored in advance in the communication app.

In step S1002, the communication app determines whether the information processing apparatus 101 has discovered the communication apparatus 151 on the network formed by the access point 131 currently connected. If the communication app determines that the communication apparatus 151 has been discovered, the sequence moves to step S1003. However, if the communication app determines that the communication apparatus 151 has not been discovered, the sequence moves to step S1004.

Specifically, upon receiving a response from the communication apparatus 151 as a result of the search for the communication apparatus 151 in step S1001, the communication app determines that the communication apparatus 151 has been discovered. The case where the communication apparatus 151 is determined to have been discovered by the communication app in step S1002 is a case where, for example, the communication apparatus 151 and the access point 131 are already connected in response to a user operation or the like. In other words, this is a state in which the information processing apparatus 101 and the communication apparatus 151 are both connected to the access point 131, and corresponds to the infrastructure connection mentioned above. On the other hand, if a response has not been received from the communication apparatus 151, the communication app determines that the communication apparatus 151 cannot be discovered.

In step S1003, the communication app performs processing for registering the communication apparatus 151 with the communication app. Specifically, for example, the communication app requests information pertaining to the communication apparatus 151 from the discovered communication apparatus 151, and obtains the information pertaining to the communication apparatus 151. The communication app also stores the obtained information pertaining to the communication apparatus 151. The information pertaining to the communication apparatus 151 includes, for example, capability information of the communication apparatus 151, the MAC address of the communication apparatus 151, and the like. Specifically, the capability information of the communication apparatus 151 includes a list of information on the functions supported by the communication apparatus 151, information on consumables such as paper, ink, or the like that can be used by the communication apparatus 151, and the like.

In this manner, the communication app can control the display of the interfaces 302 to 308 capable of accepting instructions to execute the aforementioned functions by obtaining the information pertaining to the communication apparatus 151 in step S1003. Additionally, when the communication apparatus 151 supports the cloud function, the communication app can confirm the mode of communication between the information processing apparatus 101 and the communication apparatus 151 using the MAC address of the communication apparatus 151 obtained in step S1003, and can control the display of the cloud button 306.

If the communication apparatus 151 is determined to have been discovered in step S1002 and the processing of step S1003 is executed, the communication app stores information indicating that the communication apparatus 151 has been registered through an infrastructure connection. Additionally, if the communication apparatus 151 is determined to have been discovered in step S1002 and the processing of step S1003 is executed, the information pertaining to the communication apparatus 151, obtained from the communication apparatus 151, includes a MAC address for the infrastructure connection of the communication apparatus 151. Additionally, when registering the communication apparatus 151 in the infrastructure connection, the communication app may store the SSID of the access point 131 to which the information processing apparatus 101 is connected.

In step S1004, the communication app makes a notification to prompt the user to operate the communication apparatus 151 in the network setup mode. For example, the communication app may display a message or the like in the console unit 108 prompting the communication apparatus 151 to be operated in the network setup mode.

When set to the network setup mode, the communication apparatus 151 operates as a network setup access point (connection configuration AP, setup access point), as described above. Additionally, the communication apparatus 151 can send identification information, a password, and the like of the communication apparatus 151 to the information processing apparatus 101. The identification information of the communication apparatus 151 includes information such as the SSID, the manufacturer's name, the serial number, the model name, and the like.

In step S1005, the communication app searches for the communication apparatus 151 in the network setup mode using the communication unit 109, the short-range wireless communication unit 110, and the like. The communication app displays the search results in the console unit 108. For example, the communication app may display, in the console unit 108 or the like, an interface capable of accepting an instruction to select the communication apparatus 151 from the search results displayed in the console unit 108.

In step S1006, the communication app establishes a connection with the communication apparatus 151 for which the selection instruction has been accepted from the search results displayed in step S1005. Here, the communication apparatus 151 is operating in the network setup mode, and thus the password of the communication apparatus 151 may be unnecessary when connecting the information processing apparatus 101 to the network formed by the communication apparatus 151.

In step S1007, the communication app sends a request for a list of access points around the communication apparatus 151 to the communication apparatus 151 with which the connection has been established in step S1006. The communication app receives the list of access points from the communication apparatus 151.

In step S1008, the communication app displays the list of access points received from the communication apparatus 151 in the console unit 108 or the like. For example, the communication app displays, in the console unit 108 or the like, an interface (not shown) capable of accepting an instruction to select the access point. For example, the communication app displays an interface (not shown) capable of accepting an instruction to select whether the user's desired access point is present in the list.

In step S1009, the communication app determines whether the user's desired access point is present in the list displayed in step S1008. If the communication app determines that the desired access point is present, the sequence moves to step S1010. On the other hand, if the communication app determines that the desired access point is not present, the sequence moves to step S1016. For example, the communication app makes this determination on the basis of a user operation in an interface capable of accepting an instruction to select whether the user's desired access point displayed is present in the list displayed in step S1008. The following will describe a case where the user's desired access point is present (Yes in S1009) and a case where the user's desired access point is not present (No in S1009).

When User's Desired Access Point is Present (Yes in S1009)

In step S1010, the communication app accepts the input of the password of the access point for which the selection instruction has been accepted. The following will describe, as an example, a case where the access point 131 has been selected by the user from the list of access points displayed in step S1008. In step S1010, the communication app may display, in the console unit 108, an interface capable of accepting the input of the password of the access point 131, for example. If the settings of the access point 131 are settings that enable connections to the access point 131 without a password, this step may be skipped, and the sequence may move to step S1011.

In step S1011, the communication app sends connection information for the access point 131 for which the selection instruction has been accepted, such as the password and the SSID, to the communication apparatus 151. The communication app sends, to the communication apparatus 151, a connection request for a connection to the access point 131 for which the selection instruction has been accepted. In other words, the communication app sends information the communication apparatus 151 to join the network formed by the access point 131. If the settings of the access point 131 are settings that enable connections to the access point 131 without a password, only a connection request to the access point 131 need be sent to the communication apparatus 151.

In step S1012, the communication app cuts off the connection between the information processing apparatus 101 and the communication apparatus 151. Note that after the connection between the information processing apparatus 101 and the communication apparatus 151 in the network setup mode is cut off by the communication app, a connection between the information processing apparatus 101 and the access point 131 is established by a reconnection function of the OS of the information processing apparatus 101. The reconnection function is a function that is automatically executed regardless of instructions from the communication app. The access point 131 reconnected through the reconnection function of the OS is an AP corresponding to the connection information held by the OS, and is an AP to which the information processing apparatus 101 has connected in the past.

In step S1013, the communication app searches for the communication apparatus 151 on the network formed by the access point 131 to which the information processing apparatus 101 is connected. Specifically, the communication apparatus 151 requests a response from the communication apparatus 151 by specifying identification information of the communication apparatus 151 (a device name, a serial number, or the like) and broadcasting the information over the network formed by the access point 131.

In step S1014, the communication app determines whether the communication apparatus 151 has been discovered in the processing performed in step S1013. If the communication app determines that the communication apparatus 151 has been discovered, the sequence moves to the processing of step S 1003. However, if the communication app determines that the communication apparatus 151 has not been discovered, the sequence moves to the processing of step S1015. Specifically, upon receiving a response from the communication apparatus 151 as a result of the search for the communication apparatus 151 in step S1013, the communication app determines that the communication apparatus 151 has been discovered. On the other hand, if a response has not been received from the communication apparatus 151, the communication app determines that the communication apparatus 151 cannot be discovered.

The processing of step S1003 performed when the processing of steps S1002 to S1014 has been executed is the same as the processing of step S1003 performed when the apparatus is determined to have been discovered in step S1002 (when a determination of "Yes" is made in step S1002), and will therefore not be described.

In step S1015, the communication app makes a notification indicating that the network to which the information processing apparatus 101 is connected is different from the network to which the communication apparatus 151 is connected. For example, the communication app may display, in the console unit 108 or the like, a message indicating that the network to which the information processing apparatus 101 is connected is different from the network to which the communication apparatus 151 is connected.

When User's Desired Access Point is Not Present (No in S1009)

In step S1016, the communication app sends a request for the connection information of the communication apparatus 151 to the communication apparatus 151. The communication app receives the connection information of the communication apparatus 151 from the communication apparatus 151. Here, the connection information of the communication apparatus 151 is a password, an SSID, or the like, for example.

In step S1017, the communication app cuts off the connection between the information processing apparatus 101 and the communication apparatus 151 operating in the network setup mode. The communication app also makes a notification prompting a connection between the information processing apparatus 101 and the communication apparatus 151. For example, the communication app may display a message in the console unit 108 indicating that the information processing apparatus 101 and the communication apparatus 151 are to be connected. Notifying the user in this manner makes it possible to prompt the user to establish a connection between the information processing apparatus 101 and the communication apparatus 151 through a direct connection, as described above.

In step S1013, the communication app searches for the communication apparatus 151 on the network formed by the access point to which the information processing apparatus 101 is connected.

In step S1014, the communication app determines whether the communication apparatus 151 has been discovered in the processing performed in step S1013. If the communication app determines that the communication apparatus 151 has been discovered, the sequence moves to the processing of step S 1003. However, if the communication app determines that the communication apparatus 151 has not been discovered, the sequence moves to the processing of step S1015.

Here, of the processing of step S1003 executed by the communication app, with steps S1016 and S1017 having been performed, the points different from when a determination of "Yes" is made in step S1002, when a determination of "Yes" is made in step S1009, and the like will be described. In other words, the ways in which the processing of step S1003 performed in a direct connection differ from when the processing of step S1003 is performed in an infrastructure connection will be described here.

When the mode of communication between the information processing apparatus 101 and the communication apparatus 151 is a direct connection, in step S1003, the communication app stores information indicating that the communication apparatus 151 has been registered through the direct connection. The MAC address for the direct connection is included in the information pertaining to the communication apparatus 151 obtained by the communication app from the communication apparatus 151. Note that the stated MAC address for the infrastructure connection of the communication apparatus 151 is different from the MAC address for the direct connection of the communication apparatus 151.

In step S1015, the communication app makes a notification indicating that the network to which the information processing apparatus 101 is connected is different from the network to which the communication apparatus 151 is connected. For example, the communication app may display, in the console unit 108 or the like, a message indicating that the network to which the information processing apparatus 101 is connected is different from the network to which the communication apparatus 151 is connected.

### Processing by Communication App when Executing Predetermined Function

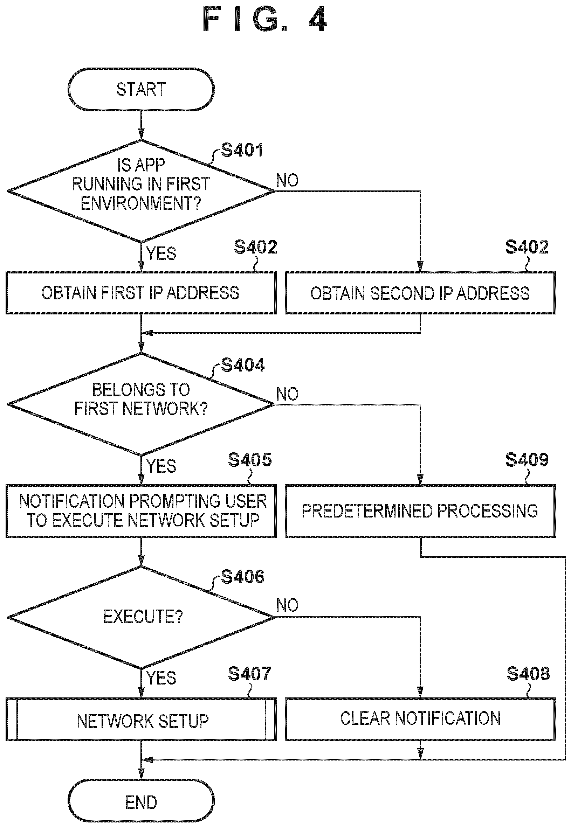

FIG. 4 is a flowchart illustrating an example of operations executed by the communication app according to the present embodiment. In this flowchart, the processing executed by the communication app is realized by, for example, the CPU 103 loading a control program stored in a memory such as the ROM 104 into the RAM 105 and executing the program.

Additionally, the processing of FIG. 4 is started, for example, based on the acceptance of an instruction to start the execution of the predetermined function. The "predetermined function" is a function that causes the communication apparatus 151 to execute predetermined processing through an external server (not shown). The present embodiment will describe the aforementioned cloud function as an example of the predetermined function. In other words, a case where the processing illustrated in FIG. 4 is executed on the basis of the cloud button 306 being pressed by the user in the home screen 300 illustrated in FIG. 3 will be described as an example. As described above, the cloud button 306 can be pressed when the communication apparatus 151 that supports the cloud function is registered in the communication app, and the mode of communication between the information processing apparatus 101 and the communication apparatus 151 is direct connection or infrastructure connection.

For example, the processing illustrated in FIG. 4 may be executed in response to the cloud button 306 being pressed by the user after the registration processing has been performed with the information processing apparatus 101 and the communication apparatus 151 in a direct connection. Additionally, for example, the processing illustrated in FIG. 4 may be executed in response to the cloud button 306 being pressed by the user after the registration processing has been performed in an infrastructure connection. The following will describe the processing illustrated in FIG. 4 for these two cases separately.

### When Executed after Registration Processing Performed in Direct Connection

In step S401, the communication app obtains environment information regarding the environment in which the communication app is running by executing an API of the Android OS. If the environment in which the communication app is running is the first environment, the API executed is an API of the host OS, and information corresponding to the first environment is obtained as the environment information. On the other hand, if the environment in which the communication app is running is the second environment, the API executed is a virtual Android OS API, and information corresponding to the second environment is obtained as the environment information. The communication app then determines whether the communication app is running in the first environment on the basis of the obtained environment information. If the communication app determines that the communication app is running in the first environment, the sequence moves to step S402, whereas if the communication app determines that the communication app is not running in the first environment, the sequence moves to step S403. If the communication app is determined to be running in the first environment, the communication app is running in an environment that is on the first OS, which is running as the host OS, but not on the guest OS, as described above. If the communication app is determined not to be running in the first environment, the communication app is running on the second OS, which is running as the host OS, and is also running on the guest OS, as described above.

The processing of step S402 is executed when the communication app is running in the first environment. In step S402, the communication app obtains the IP address of the information processing apparatus 101 through a first method. The "first method" is a method for executing a first API, and an IP address obtained through the first method will be called a "first IP address" hereinafter. The first API is an API for obtaining an IP address assigned to a Wi-Fi network interface managed by the Android OS (the first OS). In the first environment, the Android OS (the first OS) is the host OS. Therefore, by executing the first API in the first environment, an IP address assigned to the Wi-Fi network interface managed by the host OS in the first environment is obtained from the host OS. The information processing apparatus 101 is an apparatus that is connected by Wi-Fi to the Wi-Fi network interface managed by the host OS, and is assigned an IP address by an external apparatus that operates as an access point. The external apparatus that operates as an access point corresponds to a Wi-Fi parent station (parent device), as described above.

Specifically, the first API is an API using the WifiManager and WifiInfo classes. "WifiManager" is a class for managing the connection environment of the information processing apparatus 101, for example. "Wifiinfo" is a class for obtaining information pertaining to the Wi-Fi network to which the information processing apparatus 101 is connected, for example. More specifically, the first API obtains WifiInfo using a command called WifiManager#getConnectionInfo(), and obtains the first IP address using a command called WifiInfo#getIpAddress().

The processing of step S403 is executed when the communication app is running in the second environment. In step S403, the communication app obtains the IP address of the information processing apparatus 101 through a second method different from the first method. The second method is a method for using a second API different from the first API, and an IP address obtained through the second method will be called a "second IP address" hereinafter. As described above, the first API is an API for obtaining an IP address assigned to a Wi-Fi network interface managed by the Android OS (the first OS). Therefore, when the first API is executed in the second environment, an IP address assigned to a virtual Wi-Fi network interface managed by the virtual Android OS operating as the guest OS is obtained. The determination of step S404 (described later) cannot be made accurately using the IP address assigned to the virtual Wi-Fi network interface. This is because the IP address assigned to the virtual Wi-Fi network interface is assigned by the Chrome OS (the second OS), which is the host OS. In other words, the IP address assigned to the virtual Wi-Fi network interface is assigned by an apparatus to which the information processing apparatus 101 is connected over Wi-Fi, and not by the external apparatus operating as an access point. As such, in the present embodiment, in the second environment, the communication app obtains the IP address by using the second API rather than the first API.

The second API is an API for obtaining, from the host OS, information specified by the communication app as information to be obtained. In other words, in step S403, the communication app specifies the IP address of the Wi-Fi network interface managed by the Chrome OS (the second OS), which is the host OS in the second environment, as the information to be obtained, and executes the second API. In other words, the second IP address is the IP address of the Wi-Fi network interface managed by the Chrome OS (the second OS), which is the host OS in the second environment. Specifically, by executing the second API, the communication app instructs the guest OS to obtain the second IP address. Upon accepting the instruction to obtain the second IP address from the communication app, the guest OS instructs the host OS to obtain the second IP address. As a result, the guest OS obtains the second IP address from the host OS. The guest OS then sends the second IP address to the communication app. In this manner, the communication app can obtain the IP address assigned to the actual Wi-Fi network interface, rather than the IP address assigned to the virtual Wi-Fi network interface, from the host OS via the guest OS. In other words, the communication app can obtain an IP address assigned by an apparatus to which the information processing apparatus 101 is connected over Wi-Fi, and which is an external apparatus operating as an access point.

The second API may also be, for example, an API that specifies and configures processing executed by the OS. Specifically, the second API may be of a class for starting an external process from the communication app. The "external process" is an external command or program. For example, the class for launching an external process from the communication app may use a command called ProcessBuilder()#command(). For example, the communication app may specify "/system/bin/getprop" and "arc.net.ipv4.host_address" as arguments using the command ProcessBuilder()#command(). "/system/bin/getprop" is a command for confirming the system properties. "arc.net.ipv4.host_address" is an argument used when the command is executed, and is used when the communication app specifies the information to be obtained.

In the first environment, the Chrome OS (the second OS) is not present, and thus naturally, the IP address of the Wi-Fi network interface managed by the Chrome OS (the second OS) is also not present. Accordingly, in the first environment, the obtainment of the IP address of the Wi-Fi network interface managed by the Chrome OS (the second OS) is designated by the communication app, for example, and the appropriate information will therefore not be obtained even if the second API is executed. Accordingly, in the first environment, the communication app obtains the first IP address from the first OS, which is the host OS, using the first API, without using the second API.

In step S404, the communication app determines whether the information processing apparatus 101 belongs to a network formed by the communication apparatus 151 outside the information processing apparatus 101. In the following descriptions, the Wi-Fi network formed by the communication apparatus 151 is a Wi-Fi network formed by the communication apparatus 151 operating as an access point, for example. In other words, the Wi-Fi network formed by the communication apparatus 151 is a Wi-Fi network formed by the communication apparatus 151 operating in direct connection mode. The Wi-Fi network formed by the communication apparatus 151 may be called a "first network" hereinafter. In step S404, if the communication app determines that the information processing apparatus 101 belongs to the first network, the sequence moves to step S405, whereas if the communication app determines that the information processing apparatus 101 does not belong to the first network, the sequence moves to step S409.

Note that the case where the information processing apparatus 101 belongs to the first network is a case where the information processing apparatus 101 and the communication apparatus 151 are connected directly over Wi-Fi without going through an external access point, as described above. In other words, the case where the information processing apparatus 101 belongs to the first network is a case where the communication apparatus 151 operating in direct connection mode and the information processing apparatus 101 are connected over the first network through Wi-Fi. In other words, the processing of step S404 is also processing for determining whether the information processing apparatus 101 is connected to the Wi-Fi network formed by the communication apparatus 151 without going through the external access point 131. That is, it can also be said that the processing of step S404 determines whether the information processing apparatus 101 is directly connected to the communication apparatus 151.

The case where the information processing apparatus 101 does not belong to the first network is a case where the information processing apparatus 101 belongs to the Wi-Fi network formed by the external access point 131. In other words, the processing of step S404 is also processing for determining whether the information processing apparatus 101 belongs to the Wi-Fi network formed by the external access point 131. In other words, it can also be said that the processing of step S404 determines whether the mode of communication between the information processing apparatus 101 and the communication apparatus 151 is an infrastructure connection. Note that the case where the information processing apparatus 101 does not belong to the first network may include a case where the information processing apparatus 101 is not connected to any Wi-Fi network.

Additionally, in the present embodiment, the processing of step S404 is also processing for determining whether the communication apparatus 151 is connected to the access point 131 in order to start executing the cloud function. In other words, the processing of step S404 can also be said to be processing for determining whether the mode of communication between the information processing apparatus 101 and the communication apparatus 151 is a mode of communication in which the cloud function can be executed.

In step S404, for example, the communication app determines whether the information processing apparatus 101 belongs to the first network using either the first IP address obtained through the processing of step S402 or the second IP address obtained through the processing of step S403. Specifically, for example, the communication app compares either the first IP address obtained through the processing of step S402 or the second IP address obtained through the processing of step S403 with the IP address of the communication apparatus 151, held in advance since the communication app was installed in the information processing apparatus 101, and makes the determination on the basis of the result of the comparison. Note that if the processing of step S402 has been executed, the first IP address obtained through the processing of step S402 is used for the determination in step S404, and if the processing of step S403 has been executed, the first IP address obtained through the processing of step S403 is used for the determination in step S404. In the following descriptions, the IP address of the communication apparatus 151 held in advance since the communication app was installed in the information processing apparatus 101 will be called a "third IP address". As described above, the IP address managed by the host OS of the information processing apparatus 101 is assigned by apparatus currently connected. Additionally, the present embodiment assumes that if the information processing apparatus 101 is connected to the communication apparatus 151 through Wi-Fi over the first network formed by the communication apparatus 151 supporting the communication app, the communication apparatus 151 assigns the third IP address to the information processing apparatus 101. As such, if the information processing apparatus 101 is connected to the communication apparatus 151 through Wi-Fi over the first network formed by the communication apparatus 151 supporting the communication app, the IP address obtained in step S402 or S403 is assigned by the communication apparatus 151. The communication app can therefore determine whether the information processing apparatus 101 belongs to the first network by comparing either the first IP address or the second IP address with the third IP address.

Specifically, in step S404, the communication app compares, for example, the network part of the first IP address or the second IP address with the network part of the IP address of the communication apparatus 151, and determines whether the network parts are the same. If the network parts of the IP addresses are determined to be the same, the information processing apparatus 101 can determine that the information processing apparatus 101 belongs to the first network. However, if the network parts of the IP addresses are determined to be different, the information processing apparatus 101 can determine that the information processing apparatus 101 does not belong to the first network. Note that in step S404, the communication app may make the determination by comparing the IP addresses as a whole, rather than comparing the network parts of the IP addresses. The communication app moves the sequence to step S405 if the result of the determination made in step S404 is "Yes", and moves the sequence to step S409 if the result of the determination made in step S404 is "No".

Note that if the result of the determination made in step S404 is "No", the communication app may determine whether the information processing apparatus 101 is capable of Internet communication through the connection with the access point 131 before moving to step S409. Specifically, for example, the communication app attempts Internet communication with an external server recognized in advance, and whether the information processing apparatus 101 is capable of Internet communication through the connection with the access point 131 is then determined on the basis of whether that Internet communication is successful. The sequence may move to step S409 if the result of the determination is "Yes", and to step S405 if the result of the determination is "No". For example, if the result of the determination made in step S404 is "No", the communication app may determine whether the information processing apparatus 101 has established a Wi-Fi connection with another apparatus before moving to step S409. The sequence may move to step S409 if the result of the determination is "Yes", and to step S405 if the result of the determination is "No". The determination as to whether the information processing apparatus 101 has established a Wi-Fi connection with another apparatus may be made before step S404. The sequence may move to step S404 if the result of the determination is "Yes", and to step S405 if the result of the determination is "No".

Of the network part and the host part of the IP address of the communication apparatus 151, the network part may be unique to the provider (vendor) of the communication apparatus 151. The network part is information identifying the network to which the apparatus belongs. The host part is information for identifying apparatuses belonging to a network.

Here, it is assumed that the processing illustrated in FIG. 4 is executed after the registration processing has been performed in a direct connection state. For example, this is a case where the user has pressed the cloud button 306 after the processing of step S1003 has been performed by the communication app, in a state where the information processing apparatus 101 belongs to the first network, in the registration processing described above. As such, the state described here is one in which the communication app determines in step S404 that the information processing apparatus 101 belongs to the first network and the sequence moves to step S405.

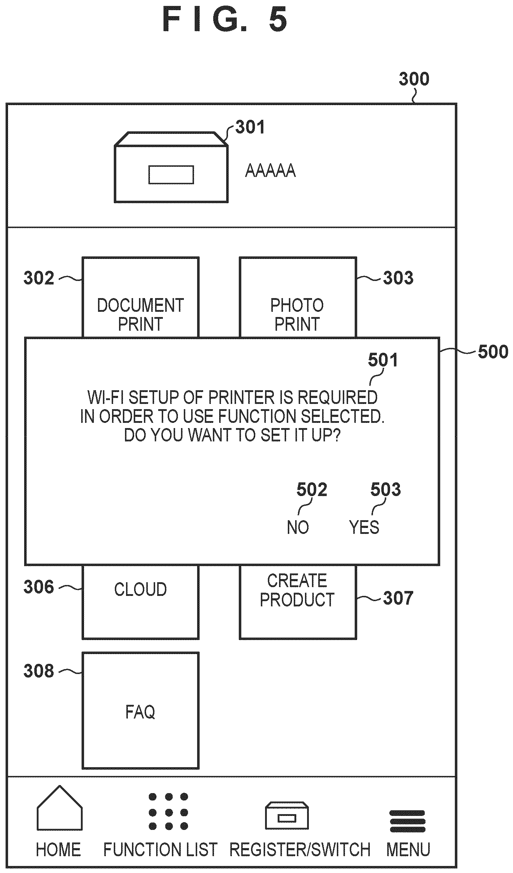

In step S405, the communication app makes a notification prompting the user to execute the network setup. Here, the descriptions will refer to FIG. 5. FIG. 5 is a diagram illustrating an example of the notification made by the communication app in step S405. In step S405, the communication app displays a notification 500 as a popup on the home screen 300, as illustrated in FIG. 5.

A message 501 and buttons 502 and 503 are displayed in the notification 500, for example. The message 501 is a message indicating that the network setup for the communication apparatus 151 is required in order to use the function selected by the user, and prompting the network setup to be performed. The button 502 is an interface capable of accepting an instruction to clear the notification 500, for example. The button 503 is an interface capable of accepting an instruction to execute the network setup.

Note that the network setup is also processing for causing the information processing apparatus 101 and the communication apparatus 151 to join the Wi-Fi network formed by the access point 131, as will be described later. In other words, it can also be said that in step S405, the communication app makes a notification to cause the information processing apparatus 101 and the communication apparatus 151 to join a second network.

The aforementioned predetermined function selected by the user is the cloud function in this example. For the communication app to execute the cloud function, it is necessary for both the information processing apparatus 101 and the communication apparatus 151 to join the network formed by the access point 131. Accordingly, if in step S404 the information processing apparatus 101 is determined to belong to the first network, the communication app displays the notification 500 prompting the connection destination to be changed to the second network. Through this, when the user uses the cloud function, for example, the user can be guided to change the connection destination to the second network by the notification 500.

In step S406, the communication app determines whether to execute the network setup. If the communication app determines that the network setup is to be executed, the sequence moves to step S407, whereas if the communication app determines that the network setup is not to be executed, the sequence moves to step S408. Specifically, in step S407, the communication app determines that the network setup is to be executed when, for example, the button 503 of the notification 500 displayed on the home screen 300 is pressed by the user in step S405. On the other hand, the communication app determines that the network setup is not to be executed when the button 502 is pressed by the user.

In step S407, the communication app executes the network setup. After executing the network setup processing, the communication app clears the notification 500 from the home screen 300 and ends the sequence illustrated in FIG. 4. Note that the network setup process will be described in detail later.

In the present embodiment, the communication app ends the sequence illustrated in FIG. 4 after executing the processing of step S407, but the configuration is not limited thereto. For example, when the information processing apparatus 101 and the communication apparatus 151 have both joined the second network by the processing of step S407 being executed, the communication app may execute the same processing as in step S409 (described later).

In step S408, the communication app clears the notification 500 from the home screen 300 and ends the sequence illustrated in FIG. 4.

### Network Setup Processing

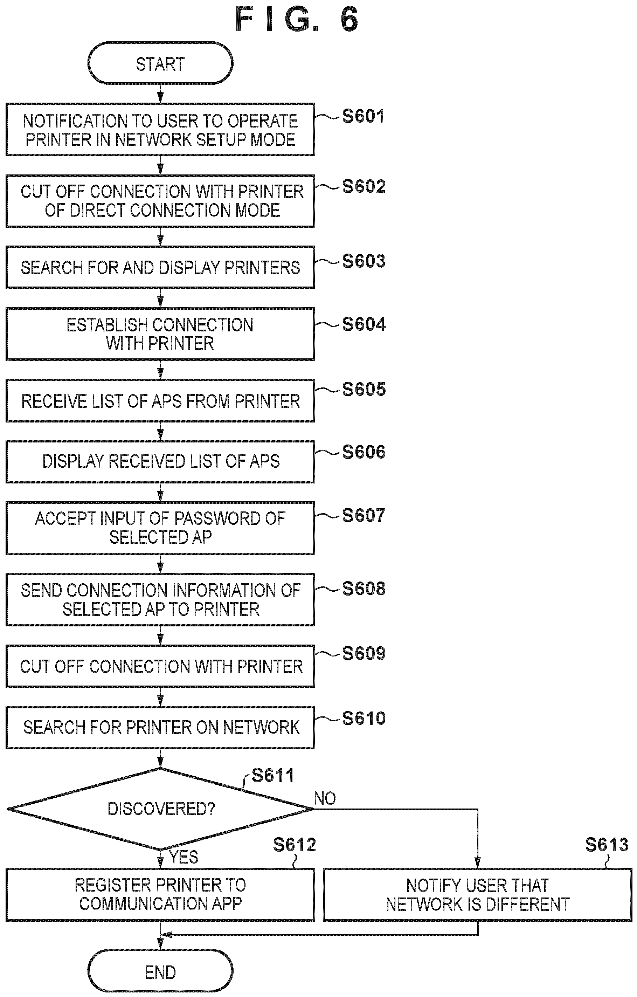

The network setup will be described here with reference to FIG. 6. FIG. 6 is a flowchart illustrating an example of the network setup processing executed by the communication app according to the present embodiment. In this flowchart, the processing executed by the communication app is realized by, for example, the CPU 103 loading a control program stored in a memory such as the ROM 104 into the RAM 105 and executing the program. The processing illustrated in FIG. 6 corresponds to the processing of step S404 executed by the communication app, for example.

In step S601, the communication app makes a notification to the user to operate the communication apparatus 151 in the network setup mode. Specifically, the communication app may display, on the home screen 300, a message indicating that the communication apparatus 151 is to be operated in the network setup mode.

When set to the network setup mode, the communication apparatus 151 operates as a network setup access point (connection configuration AP, setup access point), as described above. Additionally, the communication apparatus 151 can send identification information, a password, and the like of the communication apparatus 151 to the information processing apparatus 101. The identification information of the communication apparatus 151 includes information such as the SSID, the manufacturer's name, the serial number, the model name, and the like.

In step S602, the communication app cuts off the direct connection between the information processing apparatus 101 and the communication apparatus 151. In other words, the communication app establishes a communication mode in which the information processing apparatus 101 does not belong to the first network.

In step S603, the communication app searches for the communication apparatus 151 in the network setup mode using the communication unit 109, the short-range wireless communication unit 110, and the like. The communication app displays the search results in the console unit 108. For example, the communication app accepts an instruction to select the communication apparatus 151 from the search results displayed in the console unit 108. For example, the communication app may display, in the console unit 108, an interface capable of accepting an instruction to select the communication apparatus 151 from the search results.

In step S604, the communication app establishes a connection with the communication apparatus 151 in the network setup mode.

In step S605, the communication app requests a list of access points around the communication apparatus 151 from the communication apparatus 151. The communication app receives the list of access points discovered through the search by the communication apparatus 151.

In step S606, the communication app displays the list of access points received in step S605, and accepts a selection instruction from the user. For example, the communication app displays, in the console unit 108 or the like, an interface (not shown) capable of accepting an instruction to select the access point.

In step S607, the communication app accepts the input of the password of the access point selected in step S606. Specifically, the communication app displays an interface capable of accepting the input of the password of the access point for which the selection was accepted in step S607.

In step S608, the communication app sends, to the communication apparatus 151, the SSID of the access point for which the selection was accepted in step S606 and the password for which the input was accepted in step S607. The communication app sends, to the communication apparatus 151, a connection request for a connection to the access point 131 for which the selection instruction has been accepted. In other words, the communication app sends information the communication apparatus 151 to join the Wi-Fi network formed by the access point 131.

In step S609, the communication app cuts off the connection between the information processing apparatus 101 and the communication apparatus 151 operating in the network setup mode. Note that after the connection between the information processing apparatus 101 and the communication apparatus 151 in the network setup mode is cut off by the communication app, a connection between the information processing apparatus 101 and the access point 131 is established by a reconnection function of the OS of the information processing apparatus 101. The reconnection function is a function that is automatically executed regardless of instructions from the communication app. The access point 131 reconnected through the reconnection function of the OS is an AP corresponding to the connection information held by the OS, and is an AP to which the information processing apparatus 101 has connected in the past. In other words, after the connection between the information processing apparatus 101 and the communication apparatus 151 in the network setup mode is cut off by the communication app in step S609, the reconnection function results in the information processing apparatus 101 belonging to the second network.

In step S610, the communication app searches for the communication apparatus 151 on the second network to which the information processing apparatus 101 belongs. The search is performed, for example, through communication using the above-described infrastructure connection. For example, the communication app specifies the identification information of the communication apparatus 151 and requests a response from the communication apparatus 151 using a predetermined protocol.

For example, the communication app specifies an Object IDentifier (OID) indicating the device name, serial number, or the like of the communication apparatus 151. Then, a response from the communication apparatus 151 is requested by broadcasting a Get Request command on the second network to which the information processing apparatus 101 belongs, using the Simple Network Management Protocol ("SNMP" hereinafter).

In step S611, the communication app determines whether the communication apparatus 151 has been discovered. If the communication app determines that the communication apparatus 151 has been discovered, the sequence moves to step S612. However, if the communication app determines that the communication apparatus 151 has not been discovered, the sequence moves to step S613. Specifically, through the processing executed in step S610, the communication app determines that the communication apparatus 151 has been discovered when a response has been received therefrom, and determines that the communication apparatus 151 has not been discovered when a response has not been received therefrom.

Note that a case where the communication apparatus 151 is determined to have been discovered by the communication app is, in other words, a case where both the information processing apparatus 101 and the communication apparatus 151 belong to the second network. In other words, the network setup of FIG. 6 can also be said to be processing for causing both the information processing apparatus 101 and the communication apparatus 151 to join the second network.

In step S612, the communication app performs processing for registering the discovered communication apparatus 151. Specifically, for example, the communication app requests information pertaining to the communication apparatus 151 from the discovered communication apparatus 151, and obtains the information pertaining to the communication apparatus 151. The communication app also stores the obtained information pertaining to the communication apparatus 151. The information pertaining to the communication apparatus 151 includes, for example, capability information of the communication apparatus 151, the infrastructure connection MAC address of the communication apparatus 151, and the like, as described above. In step S612, the communication app stores information indicating that the communication apparatus 151 has been registered in an infrastructure connection.

In step S613, the communication app makes a notification indicating that the information processing apparatus 101 and the communication apparatus 151 belong to different networks. For example, the communication app may display a notification on the home screen 300 indicating that the information processing apparatus 101 and the communication apparatus 151 belong to different Wi-Fi networks.

When Executed after Registration Processing Performed in Infrastructure Connection

Next, a case will be described where the processing illustrated in FIG. 4 is executed in response to the cloud button 306 being pressed by the user after the registration processing has been performed in an infrastructure connection.

The processing of steps S401 to S403 is the same as when the information processing apparatus 101 and the communication apparatus 151 are connected directly, and thus descriptions thereof will be omitted.

In step S404, the communication app determines whether the information processing apparatus 101 belongs to the first network using either the first IP address obtained through the processing of step S402 or the second IP address obtained through the processing of step S403. Here, it is assumed that the cloud button 306 has been pressed by the user after the registration processing has been performed in the infrastructure connection. Specifically, for example, this is a case where the user has pressed the cloud button 306 after the processing of step S1003 has been performed by the communication app, in a state where the information processing apparatus 101 belongs to the second network, in the registration processing described above. In this case, the processing illustrated in FIG. 4 is executed while the information processing apparatus 101 and the communication apparatus 151 are in an infrastructure connection. As such, the state described here is one in which the communication app determines in step S404 that the information processing apparatus 101 does not belong to the first network and the sequence moves to step S409.

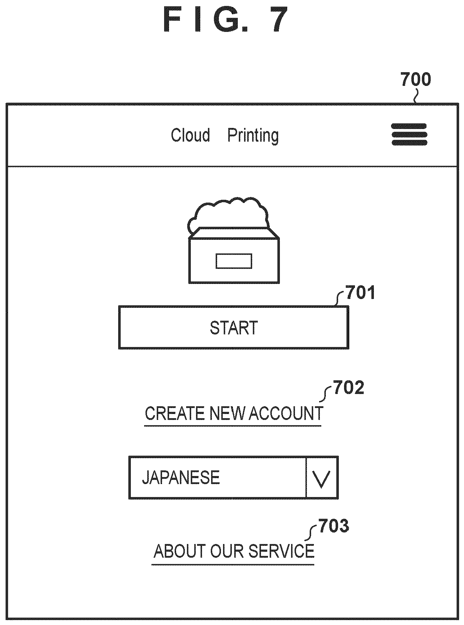

In step S409, the communication app executes the predetermined processing. The communication app ends the processing illustrated in FIG. 4 after executing the predetermined processing. Specifically, in step S409, the communication app displays a screen for using the predetermined function over the network. As described above, the case where the result of the determination made in step S404 is "No" can include cases where the information processing apparatus 101 is not connected to any Wi-Fi network. Therefore, in the present embodiment, the sequence can move to step S409 even if the information processing apparatus 101 is not connected to any Wi-Fi network. However, the predetermined processing includes Internet communication over a Wi-Fi network. Therefore, if the information processing apparatus 101 is not connected to any Wi-Fi network, the Internet communication experiences an error, and the processing of the flowchart ends without the predetermined processing being completed. The screen displayed by the communication app in the processing of step S409 will be described here with reference to FIG. 7. FIG. 7 is a diagram illustrating an example of a screen 700 for using the predetermined functions. In this example, the screen 700 for using the predetermined functions is, for example, a web page. For example, each of interfaces 701 to 703 related to the predetermined function is displayed in the screen 700. In this example, the screen 700 will be described as a screen for using the cloud function, which serves as the predetermined function as described above.

The interface 701 is a link capable of accepting an instruction to start the cloud function. After the interface 701 is pressed, first, the communication app sends information instructing the communication apparatus 151 to send the serial number of the communication apparatus 151 to the external server (not shown) corresponding to the cloud function. Having received the information, the communication apparatus 151 sends its own serial number to the external server. Thereafter, the communication apparatus 151 sends information indicating whether the serial number has been successfully sent to the information processing apparatus 101. If the information indicates a failure, the information processing apparatus 101 displays an error message through the communication app, whereas if the information indicates success, the information processing apparatus 101 displays a web page for registering the communication apparatus 151 with the service corresponding to the cloud function through the communication app. The information processing apparatus 101 then accepts the input of account information for logging into the user's account from the user through the web page, and sends the account information to the external server. Once the correct account information has been sent to the external server and the account login succeeds, the information processing apparatus 101 sends the serial number obtained from the communication apparatus 151 when the communication app registered the communication apparatus 151 with the external server. Through this, the external server manages the user's account in association with the communication apparatus 151 corresponding to the serial number, and the external server can provide the service of the cloud function to the user and the communication apparatus 151. This completes the processing of registering the communication apparatus 151 with the service of the cloud function, and thereafter, cloud printing can be executed from the communication app. Note that cloud printing is a function for causing the communication apparatus 151 to print image data on the Internet. The "image data on the Internet" is image data from a cloud service or a social network service, for example. If the communication apparatus 151 is already registered with the cloud function, the predetermined processing may be processing for sending a print job to the communication apparatus 151 through the cloud printing, rather than processing for registering the communication apparatus 151 with the cloud function. The interface 702 is a link capable of accepting an instruction to create an account for using the cloud function. In other words, the screen 700 can also be said to be a screen for starting to use the cloud function. The interface 703 is a link capable of accepting an instruction to display a description of the cloud function.

According to the present embodiment as described thus far, when, for example, an instruction to execute a predetermined function, such as a cloud function, is accepted, the communication app determines whether the operating environment of the communication app is a first operating environment that is on a first OS operating as a host OS, but is not on a guest OS, or a second operating environment that is on a second OS operating as the host OS and is also on the guest OS. If the operating environment is determined to be the first operating environment, the communication app obtains the first IP address from the first OS, and if the operating environment determined to be the second operating environment, the communication app obtains the second IP address from the second OS. In this manner, the communication app can determine the operating environment of the communication app, vary the method for obtaining the IP address according to the operating environment, and obtain the appropriate IP address.

Additionally, according to the present embodiment, the communication app determines whether the information processing apparatus 101 belongs to the first network formed by the communication apparatus 151 by using either the first IP address or the second IP address. If the information processing apparatus 101 is determined to belong to the first network formed by the communication apparatus 151, the communication app executes processing to cause both the information processing apparatus 101 and the communication apparatus 151 to join the second network. Through this, the network to which the information processing apparatus 101 and the communication apparatus 151 belong can be changed when an instruction to execute the predetermined function is accepted from the user while the information processing apparatus 101 belongs to the first network. Additionally, by the communication app varying the method for obtaining the IP address according to the operating environment as described above, the network to which the information processing apparatus 101 and the communication apparatus 151 belong can be appropriately changed even when the communication app operates in the second operating environment.

Although the present embodiment describes a case where the processing illustrated in FIG. 4 is executed when the cloud button 306 is pressed, the configuration is not limited thereto, and the processing may be executed when a different button is pressed. For example, the processing illustrated in FIG. 4 may be executed when an interface (not shown) capable of accepting an instruction to start executing a point function is pressed.

Note that the information processing apparatus 101 can communicate with an external apparatus (the communication apparatus 151, an external server (not shown), or the like) through the communication app. For example, when the information processing apparatus 101 communicates with the external apparatus through the communication app, the information processing apparatus 101 may send various types of jobs, such as print jobs, to the communication apparatus 151 through the communication app. Additionally, for example, there are cases where the information processing apparatus 101 sends the connection information of the access point to the communication apparatus 151 during the network setup, and cases where the information processing apparatus 101 communicates with the external server (not shown) for registering the communication apparatus 151 when executing the cloud function, for example. When the information processing apparatus 101 communicates with the external apparatus through the communication app in this manner, the communication is realized by sending a packet, for example. The IP address obtained by the communication app is included in the packet sent when the information processing apparatus 101 communicates with the external apparatus through the communication app. The IP address is obtained by the communication app using the first API, for example, regardless of whether the operating environment of the communication app is the first environment or the second environment.

### Second Embodiment

A second embodiment will be described next, focusing on differences from the first embodiment. The first embodiment described a configuration in which upon accepting an instruction to start executing the cloud function, the communication app determines the operating environment of the communication app, and varies the method for obtaining the IP address of the information processing apparatus 101 according to the result of the determination. The communication app communicates with the communication apparatus 151 when executing a communication function, such as the print job sending function, with the communication apparatus 151 registered in the communication app, over the network to which the information processing apparatus 101 belongs. The communication app determines the operating environment of the communication app after that communication fails. A configuration will be described in which the communication app varies the method for obtaining the IP address of the information processing apparatus 101 according to the operating environment, determines the mode of communication between the information processing apparatus 101 and the communication apparatus 151 using the obtained IP address, and executes processing for changing the mode of communication as appropriate.

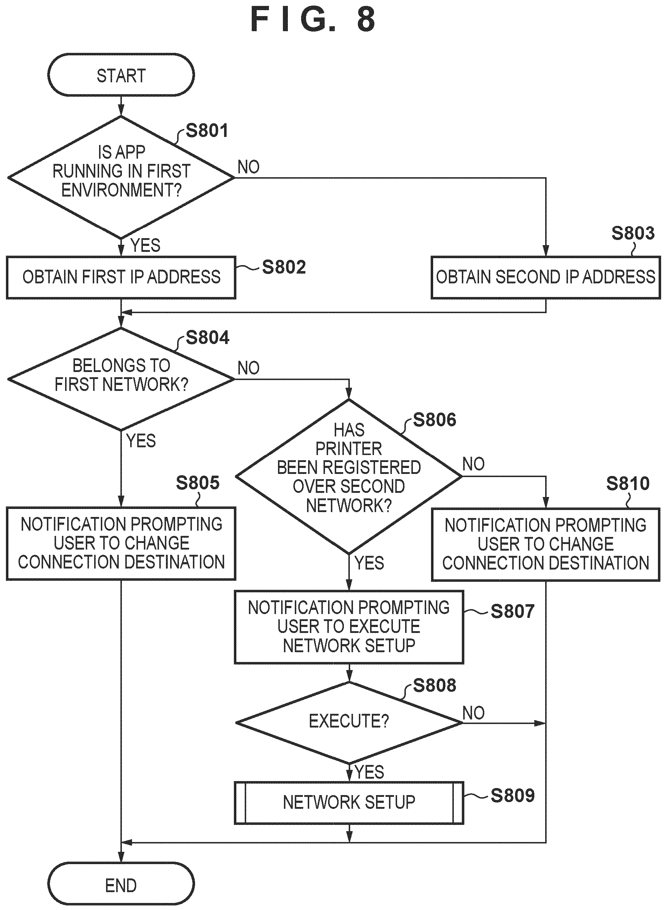

FIG. 8 is a flowchart illustrating an example of operations executed by the communication app according to the present embodiment. In this flowchart, the processing executed by the communication app is realized by, for example, the CPU 103 loading a control program stored in a memory such as the ROM 104 into the RAM 105 and executing the program.

The processing of FIG. 8 is started, for example, after the communication app accepts an instruction to execute a function for communicating with the communication apparatus 151 (communication function) and, as a result of executing the communication function, the communication with the communication apparatus 151 using the communication function fails. Specifically, in the present embodiment, the communication function is the print job sending function, for example. In other words, the processing of FIG. 8 is executed after the document print button 302, the photo print button 303, or the like is pressed by the user but the print job sending function could not be executed. Specifically, the case where the print job sending function could not be executed is a case where the communication app could not discover the communication apparatus 151 registered with the communication app on the network to which the information processing apparatus 101 belongs. For example, when the communication app executes the print job sending function, a print job is sent to the communication apparatus 151 registered with the communication app using the MAC address stored in the registration processing. Additionally, in the registration processing, the MAC address for the infrastructure connection of the communication apparatus 151 is different from the MAC address for the direct connection of the communication apparatus 151, as described above. In other words, depending on the mode of communication between the information processing apparatus 101 and the communication apparatus 151, the MAC address of the communication apparatus 151 registered with the communication app during the registration processing is different. For example, after the communication apparatus 151 is registered with the communication app, the mode of communication between the information processing apparatus 101 and the communication apparatus 151 may be changed to a mode different from the mode used during the registration processing. In such a case, even if the print job is sent to the communication apparatus 151 registered with the communication app using the MAC address stored during the registration processing, the sending of the print job will fail. When the sending of the print job fails, the communication app displays a notification (not shown) indicating that the information processing apparatus 101 and the communication apparatus 151 are unable to communicate, for example. This notification is displayed, for example, as a screen for executing a network diagnostic function. The sequence illustrated in FIG. 8 is started, for example, when a button displayed on the screen, which is capable of accepting an instruction to execute the network diagnostic function, is pressed. Although the present embodiment describes the print job sending function as an example of the communication function, the configuration is not limited thereto, and the copy job sending function, the scan job sending function, or the like may be used instead. In other words, the communication function may be any function involving communication with the communication apparatus 151.

The processing of steps S801 to S803 is the same as the processing of steps S401 to S403 in FIG. 4, and will therefore not be described here.

In step S804, the communication app determines whether the information processing apparatus 101 belongs to the first network. If in step S804 the communication app determines that the information processing apparatus 101 belongs to the first network, the sequence moves to step S805, whereas if the communication app determines that the information processing apparatus 101 does not belong to the first network, the sequence moves to step S806. This determination is made in the same manner as the processing of step S402, and will therefore not be described here. Note that an example of cases where the information processing apparatus 101 does and does not belong to the first network in step S804 of the present embodiment will be described hereinafter.

First, an example of a case where the information processing apparatus 101 is determined to belong to the first network by the communication app in the processing of step S804 according to the present embodiment ("Yes" in step S804) will be described. For example, after the registration processing has been performed with the information processing apparatus 101 and the communication apparatus 151 in an infrastructure connection, the mode of communication between the information processing apparatus 101 and the communication apparatus 151 may be changed to a direct connection. For example, the mode of communication between the information processing apparatus 101 and the communication apparatus 151 may be changed to a direct connection by a user operation made from a wireless setting screen (a Wi-Fi setting screen) of the information processing apparatus 101, without going through the registration processing. In such a case, in the processing of step S804, the communication app determines that the information processing apparatus 101 belongs to the first network.

Additionally, an example of a case where the information processing apparatus 101 is determined not to belong to the first network by the communication app in the processing of step S804 according to the present embodiment ("No" in step S804) will be described. For example, after the communication apparatus 151 is registered with the communication app with the information processing apparatus 101 and the communication apparatus 151 in an infrastructure connection through the access point 131, the connection destination of the information processing apparatus 101 may be changed, by a user operation, to another access point different from the access point 131. Specifically, for example, it is possible that when registering the communication apparatus 151 with the communication app, the information processing apparatus 101 has been connected to the access point 131, but the access point to which the information processing apparatus 101 is connected is changed after the registration. Additionally, for example, there are cases where the information processing apparatus 101 and the communication apparatus 151 are connected to the access point 131 through an infrastructure connection after the registration processing has been performed with the information processing apparatus 101 and the communication apparatus 151 in a direct connection. In such cases, in the processing of step S804, the communication app determines that the information processing apparatus 101 belongs to the first network, for example.

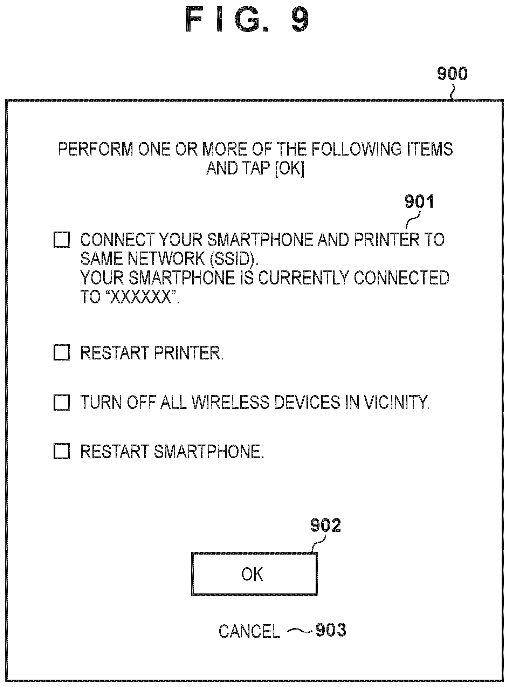

In step S805, the communication app makes a notification prompting the connection destination of the information processing apparatus 101 to be changed. Here, the descriptions will refer to FIG. 9. FIG. 9 is a diagram illustrating an example of a notification displayed in the console unit 108 by the communication app in step S805. In step S805, the communication app displays a notification 900 in the console unit 108, for example.

The notification 900 includes, for example, a message 901 prompting the information processing apparatus 101 and the communication apparatus 151 to join the second network. In other words, the processing of step S805 is processing for causing the information processing apparatus 101 and the communication apparatus 151 to both join the second network. To rephrase, the processing of step S805 is also a notification that guides the user to set the information processing apparatus 101 and the communication apparatus 151 to an infrastructure connection. For example, the message 901 may include information indicating the apparatus operating as an access point to which the information processing apparatus 101 is connected (an SSID or the like).

Such a notification can prompt the user to return to the communication mode used during registration even if, for example, the communication apparatus 151 has been registered with the communication app while the information processing apparatus 101 and the communication apparatus 151 were in an infrastructure connection, but the connection between the information processing apparatus 101 and the communication apparatus 151 was then changed to a direct connection.

The notification 900 may also include a message prompting the communication apparatus 151 to be restarted, a message prompting the user to power off apparatuses around the information processing apparatus 101, a message prompting the user to restart the information processing apparatus 101 currently being used, or the like. The notification 900 may also include, for example, interfaces 902 and 903 capable of accepting an instruction to select whether to execute processing corresponding to each message displayed in the notification 900.

In step S806, the communication app determines whether the communication apparatus 151 has been registered over the second network in the registration processing. In other words, the communication app determines whether the communication apparatus 151 has been registered while the information processing apparatus 101 and the communication apparatus 151 are in an infrastructure connection. If the communication app determines that the communication apparatus 151 has been registered over the second network, the sequence moves to step S807. On the other hand, if the communication app determines that the communication apparatus 151 has not been registered over the second network, the sequence moves to step S810. A case where the communication apparatus 151 has not been registered with the communication app over the second network corresponds to a case where, for example, the communication apparatus 151 has been registered over the first network.

Specifically, in step S806, for example, the communication app refers to information, stored during the registration processing, indicating the mode of communication between the information processing apparatus 101 and the communication apparatus 151 when registering the communication apparatus 151. For example, when information indicating the communication apparatus 151 was registered in an infrastructure connection is stored, the communication app determines that the communication apparatus 151 was registered over the second network. On the other hand, when information indicating the communication apparatus 151 was registered in a direct connection is stored, the communication app determines that the communication apparatus 151 was not registered over the second network.

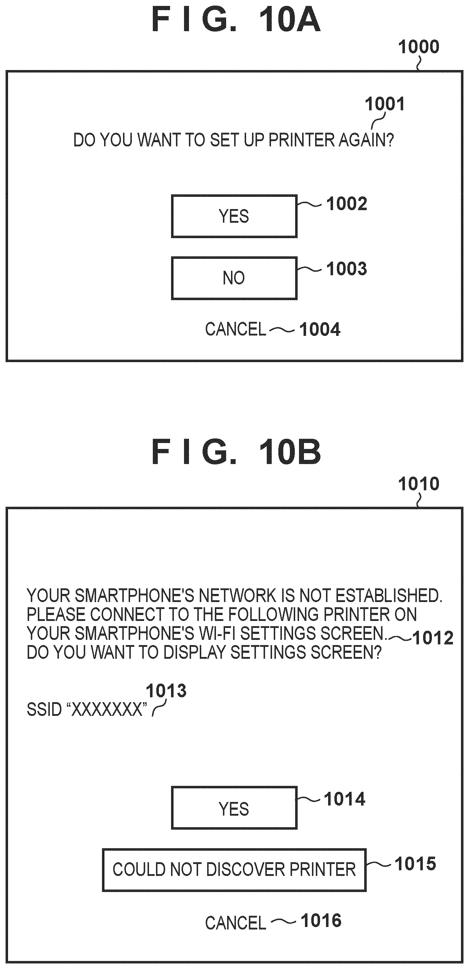

In step S807, the communication app makes a notification prompting network setup to be executed. Here, the descriptions will refer to FIG. 10A. FIG. 10A is a diagram illustrating an example of a notification 1000 displayed in the console unit 108 by the communication app in step S808. The notification 1000 includes, for example, a message 1001 prompting the network setup to be executed. The notification 1000 includes an interface 1002 capable of accepting an instruction to execute the network setup, and an interface 1003 capable of accepting an instruction to not execute the network setup. An interface 1004 capable of accepting an instruction to terminate the sequence illustrated in FIG. 8 may also be displayed in the notification 1000, for example.

In other words, the notification 1000 prompting the execution of the network setup in step S807 is also a notification for causing the information processing apparatus 101 and the communication apparatus 151 to both join the network formed by the access point to which the information processing apparatus 101 is connected. For example, as described above, after registering the communication apparatus 151 with the communication app through an infrastructure connection between the information processing apparatus 101 and the communication apparatus 151 via the access point 131, the connection destination of the information processing apparatus 101 may be changed to another access point, different from the access point 131, through a user operation. Meanwhile, there are cases where the user wishes to maintain the state in which the connection destination of the information processing apparatus 101 has been changed to the other access point. Even in such a case, displaying the notification 1000 in step S807 makes it possible to propose processing for putting the information processing apparatus 101 and the communication apparatus 151 into a communication mode in which print jobs can be used, without changing the connection destination of the information processing apparatus 101.

Although an example is described here in which the sequence moves to step S807 when the communication app determines in step S806 that the communication apparatus 151 has been registered over the second network in the registration processing, the configuration is not limited thereto.

For example, if the communication apparatus 151 is determined in step S806 to have been registered over the second network in the registration processing, the communication app may display a notification (not shown) indicating that the network to which the information processing apparatus 101 currently belongs is different from the network over which the registration processing was performed. The SSID of the access point to which the information processing apparatus 101 was connected when the communication app performed the registration processing may be displayed in this notification, for example. For example, the SSID of the access point to which the information processing apparatus 101 is currently connected may be displayed in the notification. Additionally, an interface capable of accepting an instruction to reconnect to the access point to which the information processing apparatus 101 was connected when the communication app performed the registration processing may be displayed in this notification, for example. An interface capable of accepting an instruction to continue using the access point to which the information processing apparatus 101 is connected may also be displayed in this notification, for example. The configuration may also be such that the sequence moves to step S807 when the communication app accepts an instruction to continue using the access point to which the information processing apparatus 101 is currently connected.

In step S808, the communication app determines whether to execute the network setup. If the communication app determines that the network setup is to be executed, the sequence moves to step S809. However, if the communication app determines that the network setup is not to be executed, the notification 1000 is cleared, and the sequence illustrated in FIG. 8 ends. For example, the communication app determines to execute the network setup when an instruction to execute the network setup is accepted. On the other hand, the communication app determines not to execute the network setup when an instruction not to execute the network setup is accepted.

In step S809, the communication app executes the network setup processing, clears the notification 1000, and ends the sequence illustrated in FIG. 8. The processing of step S809 is the same as the processing of step S407 (the processing of FIG. 6), and will therefore not be described.

Although this example describes a configuration in which the sequence illustrated in FIG. 8 ends after the network setup processing ends, the configuration is not limited thereto. For example, the configuration may be such that if the information processing apparatus 101 and the communication apparatus 151 are capable of communicating through an infrastructure connection after the network setup processing is executed in step S809, the communication app executes the print job sending function again.

In step S810, the communication app makes a notification prompting the connection destination of the information processing apparatus 101 to be changed. In other words, changing the connection destination refers to changing the network to which the information processing apparatus 101 belongs. Here, the descriptions will refer to FIG. 10B. FIG. 10B is a diagram illustrating an example of a notification 1010 displayed in the console unit 108 by the communication app in step S810. The notification 1010 includes, for example, a message 1012 prompting the network to which the information processing apparatus 101 belongs to be changed. The notification 1010 also includes information 1013 indicating the network to be changed to. The information 1013 indicating the network to be changed to is the SSID of the communication apparatus 151 stored in the registration processing, for example. In other words, it can also be said that in step S810, the communication app makes a notification prompting the communication apparatus 151 for which the registration processing was performed to change the connection destination of the information processing apparatus 101. Making a notification of the message 1012, the information 1013, and the like in this manner makes it possible to prompt the communication mode to be returned to the mode used during registration even when, for example, the communication apparatus 151 has been registered with the communication app while the information processing apparatus 101 and the communication apparatus 151 were in a direct connection, but the mode of communication between the information processing apparatus 101 and the communication apparatus 151 then changed to a mode different from a direct connection.

Furthermore, the notification 1010 may include an interface 1014 capable of accepting an instruction to display a screen for changing the connection destination of the information processing apparatus 101. For example, when the interface 1014 is pressed by the user, the communication app may execute processing for displaying a screen for changing the connection destination of the information processing apparatus 101.

Furthermore, the notification 1010 may include, for example, an interface 1015 capable of accepting an instruction when the connection destination of the information processing apparatus 101 cannot be discovered, an interface 1016 capable of accepting an instruction to terminate the processing illustrated in FIG. 8, or the like.

As described above, if an attempt is made to communicate with the communication apparatus 151 registered with the communication app but the communication apparatus 151 is not found, the operating environment of the communication app is determined, and the IP address of the information processing apparatus 101 is obtained according to the operating environment. The communication app determines the mode of communication between the information processing apparatus 101 and the communication apparatus 151 on the basis of the obtained IP address, and performs processing for changing the mode of communication. Through such a configuration, even if, when the communication app executes the communication function, the communication mode has been changed to a mode different from the mode of communication used when registering the communication apparatus 151 with the communication app, the communication app can return the communication mode to a mode in which the communication function can be executed. Additionally, by the communication app varying the method for obtaining the IP address according to the operating environment as described above, the mode of communication between the information processing apparatus 101 and the communication apparatus 151 can be appropriately changed even when the communication app operates in the second operating environment.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A predetermined program, which is able to operate on an operating system, configured to cause a computer to execute a method, the method comprising:
causing a computer of a first information processing apparatus (101) having a first operating environment that is on a first OS operating as a host OS but that is not on a guest OS to:
obtain a first IP address of the first information processing apparatus (101) through a first Application Programming Interface (API) on the basis of an operating environment of the predetermined program being the first operating environment;
execute first determination processing of determining whether the first information processing apparatus (101) belongs to a first network formed by a communication apparatus (151) outside the first information processing apparatus (101), using the first IP address obtained through the first API; and
execute first processing on the basis of the first information processing apparatus (101) being determined to belong to the first network in the first determination processing, and execute second processing different from the first processing on the basis of the first information processing apparatus (101) being determined not to belong to the first network in the first determination processing, and
causing a computer of a second information processing apparatus (101) having a second operating environment that is on a second OS operating as the host OS and that is on the guest OS to:
obtain a second IP address of the second information processing apparatus (101) through a second API different from the first API on the basis of an operating environment of the predetermined program being the second operating environment;
execute second determination processing of determining whether the second information processing apparatus (101) belongs to the first network, using the second IP address obtained through the second API; and
execute the first processing on the basis of the second information processing apparatus (101) being determined to belong to the first network in the second determination processing, and execute the second processing on the basis of the second information processing apparatus (101) being determined not to belong to the first network in the second determination processing.

2. The predetermined program according to claim 1,
wherein the first determination processing is processing of comparing whether a third IP address that is an IP address of the communication apparatus (151) matches the first IP address,
the first information processing apparatus (101) is determined to belong to the first network when the third IP address and the first IP address match, and the first information processing apparatus (101) is determined not to belong to the first network when the third IP address and the first IP address do not match,
the second determination processing is processing of comparing whether the third IP address and the second IP address match, and
the second information processing apparatus (101) is determined to belong to the first network when the third IP address and the second IP address match, and the second information processing apparatus (101) is determined not to belong to the first network when the third IP address and the second IP address do not match.

3. The predetermined program according to claim 2,
wherein the third IP address is an address held in advance from when the predetermined program is installed in the first information processing apparatus (101) or the second information processing apparatus (101).

4. The predetermined program according to claim 2,
wherein when the first information processing apparatus (101) belongs to the first network, the communication apparatus (151) assigns the third IP address to the first information processing apparatus (101),
when the first information processing apparatus (101) belongs to the first network, the first IP address obtained through the first API is the third IP address assigned to the communication apparatus (151),
when the second information processing apparatus (101) belongs to the first network, the communication apparatus (151) assigns the third IP address to the second information processing apparatus (101), and
when the second information processing apparatus (101) belongs to the first network, the second IP address obtained through the second API is the third IP address assigned to the communication apparatus (151).

5. The predetermined program according to claim 1,
wherein the first API is an API for obtaining an IP address assigned to a network interface managed by a predetermined OS, and
the host OS of the first information processing apparatus (101) and the guest OS of the second information processing apparatus (101) are OSs supported by the predetermined OS.

6. The predetermined program according to claim 1,
wherein the second API is an API for obtaining, from the host OS, information specified by the predetermined program, and
the second IP address is obtained by the predetermined program specifying an IP address assigned to a network interface managed by the second OS and executing the second API.

7. The predetermined program according to claim 1,
wherein the first processing is processing for connecting the communication apparatus (151) to a second network different from the first network, and
the second processing is predetermined processing including Internet communication over the second network.

8. The predetermined program according to claim 7, the method further comprising:
causing the computer of the first information processing apparatus (101) to:
control a predetermined button for executing the predetermined processing to be displayed on the basis of the first information processing apparatus (101) successfully obtaining information from the communication apparatus (151) over a network to which the first information processing apparatus (101) belongs, and control the predetermined button to not be displayed on the basis of the first information processing apparatus (101) failing to obtain information from the communication apparatus (151) over the network to which the first information processing apparatus (101) belongs, and
causing the computer of the second information processing apparatus (101) to:
control the predetermined button to be displayed on the basis of the second information processing apparatus (101) successfully obtaining information from the communication apparatus (151) over a network to which the second information processing apparatus (101) belongs, and control the predetermined button to not be displayed on the basis of the second information processing apparatus (101) failing to obtain information from the communication apparatus (151) over the network to which the second information processing apparatus (101) belongs,
wherein the first determination processing is executed on the basis of the predetermined button displayed in the first information processing apparatus (101) being operated, and
the second determination processing is executed on the basis of the predetermined button displayed in the second information processing apparatus (101) being operated.

9. The predetermined program according to claim 7,
wherein the predetermined processing is processing for sending a print job to the communication apparatus (151) via an external server on the Internet, or processing for registering the communication apparatus (151) with the external server to cause the communication apparatus (151) to execute processing for sending a usage state of the communication apparatus (151) to the external server.

10. The predetermined program according to claim 1,
wherein the first processing is processing for displaying a screen for prompting a connection destination of an apparatus on which the predetermined program is running to be changed, and
the second processing is processing for connecting the communication apparatus (151) to a second network different from the first network.

11. The predetermined program according to claim 10, the method further comprising:
causing the computer of the first information processing apparatus (101) and the computer of the second information processing apparatus (101) to:
register the communication apparatus (151) with the predetermined program by receiving predetermined information from the communication apparatus (151),
wherein the second processing is executed in the first information processing apparatus (101) on the basis of the first information processing apparatus (101) being determined not to belong to the first network in the first determination processing and the communication apparatus (151) being registered with the predetermined program in response to the predetermined information being received from the communication apparatus (151) over the second network,
the first processing is executed in the first information processing apparatus (101) on the basis of the first information processing apparatus (101) being determined not to belong to the first network in the first determination processing and the communication apparatus (151) being registered with the predetermined program in response to the predetermined information being received from the communication apparatus (151) over the first network,
the second processing is executed in the second information processing apparatus (101) on the basis of the second information processing apparatus (101) being determined not to belong to the first network in the second determination processing and the communication apparatus (151) being registered with the predetermined program in response to the predetermined information being received from the communication apparatus (151) over the second network, and
the first processing is executed in the second information processing apparatus (101) on the basis of the second information processing apparatus (101) being determined not to belong to the first network in the second determination processing and the communication apparatus (151) being registered with the predetermined program in response to the predetermined information being received from the communication apparatus (151) over the first network.

12. The predetermined program according to claim 1, the method further comprising:
causing the computer of the first information processing apparatus (101) and the computer of the second information processing apparatus (101) to execute processing for sending, to the communication apparatus (151), at least one of a print job and a scan job for scanning.

13. The predetermined program according to claim 1,
wherein in the first operating environment, the first OS that is the host OS is an Android (registered trademark) OS, and the guest OS does not run on the host OS, and
in the second operating environment, the second OS that is the host OS is a Chrome (registered trademark) OS, and the guest OS is a virtual Android (registered trademark) OS.

14. The predetermined program according to claim 1, the method further comprising:
causing the computer of the first information processing apparatus (101) and the computer of the second information processing apparatus (101) to execute determining processing for determining whether the predetermined program is running in the first operating environment or the predetermined program is running in the second operating environment.

15. A method for controlling a first information processing apparatus (101) and a second information processing apparatus (101), the first information processing apparatus (101) having a predetermined program capable of running on an operating system (OS) and having a first operating environment that is on a first OS running as a host OS, but is not on a guest OS, and the second information processing apparatus (101) having the predetermined program and having a second operating environment that is on a second OS running as the host OS, and is also on the guest OS, the method comprising:
obtaining, in the first information processing apparatus (101), a first IP address of the first information processing apparatus (101) through a first Application Programming Interface (API) on the basis of an operating environment of the predetermined program being the first operating environment;
executing, in the first information processing apparatus (101), first determination processing of determining whether the first information processing apparatus (101) belongs to a first network formed by a communication apparatus (151) outside the first information processing apparatus (101), using the first IP address obtained through the first API;
executing, in the first information processing apparatus (101), first processing on the basis of the first information processing apparatus (101) being determined to belong to the first network in the first determination processing, and executing, in the first information processing apparatus (101), second processing different from the first processing on the basis of the first information processing apparatus (101) being determined not to belong to the first network in the first determination processing;
obtaining, in the second information processing apparatus (101), a second IP address of the second information processing apparatus (101) through a second API different from the first API on the basis of an operating environment of the predetermined program being the second operating environment;
executing, in the second information processing apparatus (101), second determination processing of determining whether the second information processing apparatus (101) belongs to the first network, using the second IP address obtained through the second API; and
executing, in the second information processing apparatus (101), the first processing on the basis of the second information processing apparatus (101) being determined to belong to the first network in the second determination processing, and executing, in the second information processing apparatus (101), the second processing on the basis of the second information processing apparatus (101) being determined not to belong to the first network in the second determination processing.
